(19) Europäisches Patentamt
European Patent Office
Office européen des brevets

(11) **EP 4 734 096 A1**

(12) **EUROPEAN PATENT APPLICATION**
published in accordance with Art. 153(4) EPC

(43) Date of publication:
**29.04.2026 Bulletin 2026/18**

(21) Application number: **24831558.2**

(22) Date of filing: **30.05.2024**

(51) International Patent Classification (IPC):
**G09C 1/00** (2006.01)   **G06F 21/62** (2013.01)

(52) Cooperative Patent Classification (CPC):
**G06F 21/62; G09C 1/00**

(86) International application number:
**PCT/JP2024/019909**

(87) International publication number:
**WO 2025/004688 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.06.2023 JP 2023104035
20.11.2023 JP 2023196798**

(71) Applicant: **Leading Edge Inc.
Tokyo 102-0093 (JP)**

(72) Inventor: **YAMAMOTO, Hirosuke
Ryugasaki-shi, Ibaraki 301-0002 (JP)**

(74) Representative: **Grünecker Patent- und
Rechtsanwälte
PartG mbB
Leopoldstraße 4
80802 München (DE)**

(54) **SECRET DISTRIBUTION METHOD, SECRET DISTRIBUTION SYSTEM, AND SECRET DISTRIBUTION PROGRAM**

(57)     The present invention achieves both confidentiality and availability of a secret sharing method. The present invention includes a distribution step in which a distributed data generation unit 14 generates distributed piece data from data to be distributed, and a reconstruction step in which a data restoration unit 15 reconstructs the data to be distributed by using the distributed piece data. In the distribution step, k distributed pieces and (one or two) spare distributed pieces are generated from the data to be distributed and are stored in each of a plurality of storage units 22. In the reconstruction step, when a group of distributed pieces collected from the storage units 22 satisfies a reconstruction distribution number, the data to be distributed is reconstructed by using the group of collected distributed pieces. However, when the reconstruction distribution number is not satisfied, the spare distributed pieces are used when reconstructing the data to be distributed.

**FIG. 7**

## Description

## Technical Field

The present invention relates to a secret sharing method (henceforth referred to as "secret sharing scheme"), a secret sharing system, and a secret sharing program, in which secret information contained in a piece of sharing target data is secretly shared by shares of data, and the piece of sharing target data is restored by collecting the shares of data and reconstructing from the collected shares.

## Background Art

Secret sharing schemes (SSS) are widely used for encoding to protect critical information (secret information) from threats such as destruction and leakage.

However, a non-patent document 1 discloses that sharing by a secret sharing scheme causes an increase in total data size of shares, wherein the increase varies depending on the scheme. When handling a large size of data, this may result in a decrease in memory usage efficiency of distributed storages.

Accordingly, a non-patent document 12 proposes an n-multiplex (n, n) threshold secret sharing scheme (henceforth referred to as "MSSS"), and a non-patent document 13 shows that this scheme can be practically implemented.

## Prior Art Document(s)

## Patent Document(s)

Non-patent document 1: Shamir, Adi, "How to Share a Secret," Commun. ACM, vol.22. no.11, pp.612-613, Nov. 1979, Internet URL <http://doi.acm.org/10.1145/359168.359176>

Non-patent document 2: ISO/IEC, "Information technology - Security techniques - Secret sharing - Part 2: Fundamental mechanisms," ISO/IEC 19592-2, Oct. 2017

Non-patent document 3: Masao Yamasawa, Tokuyasu Kakuta, Takeshi Kondo, Toshiaki Saisho, Masafumi Gotaishi, Naoshi Sato, Shigeo Tsujii, Keiichi Noda, "MELT-UP Activities To Enhance Security of Cryptocurrency (Bitcoin) and Blockchain, -Focus on Private Key Management-," Proc. SCIS2018, 4F2-2.Jan. 2018.

Non-patent document 4: Masao Yamasawa, Masafumi Gotaishi, Hirosuke Yamamoto, Shigeo Tsijii, Shigenobu Minami, Kunihiko Yoshimitsu, Keiichi Noda, "Private Key Protection in Secure Distributed PDS System," Proc. SCIS2020, 2C2-2. Jan. 2020.

Non-patent document 5: Masao Yamasawa, Masafumi Gotaishi, Hirosuke Yamamoto, Yoshikazu Matsumoto, Kimiyasu Shiramizu, Taro Toyoshima, Kouhei Sese, Takeshi Kondo, Shigeo Tsujii, "Study on Requirements of Secret Sharing Scheme for Authentication of Distributed Devices Group," Proc. SCIS2020, 4G-1, pp.688-692, June 2020.

Non-patent document 6: Masafumi Gotaishi, Masao Yamasawa, Hirosuke Yamamoto, Ryo Fujita, Yoshikazu Matsumoto, Kimiyasu Shiramizu, Taro Toyoshima, Kouhei Sese, Takeshi Kondo, Shigeo Tsujii, "Secret Sharing Scheme for Authentication of Distributed Devices Group," Proc. SCIS2020, 4G-2, pp.693-697, June 2020.

Non-patent document 7: Masao Yamasawa, Takeshi Yonezu, Masafumi Gotaishi, Hirosuke Yamamoto, Shigeo Tsujii, "Requirements for Implementation of Secret Sharing Library Applications", Proceedings of Symposium on Multimedia, Distributed Cooperation, and Mobiles 2021, Proc. DICOMO2021, 1G-3, pp.163-164, Jun 2021.

Non-Patent Document 8: Masao Yamazawa, Takeshi Yonezu, Masafumi Gotaishi, Hirosuke Yamamoto, Ryo Fujita, Shigeo Tsujii, "Study on Requirements for Implementation of Secret Sharing Library," Proceedings of Symposium on Multimedia, Distributed Cooperation, and Mobiles (DICOMO2022)," Proc. DICOMO2022, 1D-1, pp. 51-54, July 2022.

Non-Patent Document 9: Tatsuaki Okamoto and Hirosuke Yamamoto, "Modern Cryptography," Sangyo Tosho Publishing Co., Ltd., June 30, 1997 (First Edition), June 30, 2000 (First Printing).

Non-Patent Document 10: Hirosuke Yamamoto, "(k, L, n) Threshold Secret Sharing System," Journal of the Institute of Electronics, Information and Communication Engineers, vol. J68-A, no. 9, pp. 945-952, September 1985 [English translation: Electronics and Communications in Japan, Part I, vol. 69, no. 9, pp. 46-54, (Scripta Technica, Inc.), September 1986]

Non-Patent Document 11: Mikihiko Nishiara and Katsunori Takizawa, "Strong Ramp Threshold Secret Sharing Scheme Using Polynomial Interpolation," Journal of the Institute of Electronics, Information and Communication Engineers, vol. J92-A, no. 12, pp. 1009-1013, December 2009

Non-Patent Document 12: Hirosuke Yamamoto, "Multiplex Secret Sharing Scheme," Proc. The 44th Symposium on Information Theory and its Applications (SITA2021), Nishinomiya, Hyogo, Japan, Dec. 8-10,2021.
Non-Patent Document 13: Masao Yamazawa, Takeshi Yonezu, Masafumi Gotaishi, Hirosuke Yamamoto, Ryo Fujita, Shigeo Tsujii, "Empirical Study on Requirements for Implementation of Secret Sharing Library," Proc. SCIS2023, 2B2-4, January 24-27, 2023.
Non-Patent Document 14: Dai Igarashi, Kota Tsuyuzaki, Yuto Kawahara, "SHH: Ultra-High-Speed Secret Sharing Library for Object Storage," Technical Report of Information Processing Society of Japan, Vol. 2015-CSEC-70 No. 26, Vol. 2015-SPT-14 No. 26, 2015/7/3
Non-Patent Document 15: "[Windows 11] Verifying Identity of Files by Calculating MD/SHA-1/SHA-256 Hash Values," [online], [searched November 2, 2023], Internet <URL: 1714031509391_0.html>

## Summary of Invention

### Problems to be Solved by Invention

Secret sharing schemes are characterized by satisfying simultaneously security requirements for protecting critical information from risks, and availability requirements for allowing system continuous operation, wherein the security requirements and the availability requirements are in conflict with each other in general. However, with the MSSS of non-patent document 12, it is possible to fail to satisfy the availability requirements.

The present invention has been made to solve such conventional problems. Accordingly, it is an object of the present invention to provide a secret sharing scheme capable of ensuring both confidentiality and availability by enhancing availability while maintaining high-speed computational performance of the MSSS of non-patent document 12.

### Means to Solve Problems

According to one aspect of the present invention, a secret sharing method using a secret sharing system, wherein the secret sharing system includes: a share data generation section configured to generate a set of shares by encoding and distributing sharing target data; storage sections each of which is configured to store a corresponding one of the shares; and a data restoration section configured to collect the shares stored in the storage sections, and decode the collected shares and reconstruct the sharing target data in accordance with a predetermined reconstructing shares count; the secret sharing method comprises: a share data generation step to cause the share data generation section to generate, from the sharing target data, a set of first shares corresponding to the reconstructing shares count, and an auxiliary share redundant from the set of first shares, and distribute and store the generated first shares and the generated auxiliary share in the storage sections; and a reconstruction step to cause the data restoration section to collect the first shares and the auxiliary share from the storage sections, and when the collected set of first shares satisfies the reconstructing shares count, reconstruct the sharing target data using the collected set of first shares, and when the collected set of first shares does not satisfy the reconstructing shares count, determine an unavailable one of the first shares based on available ones of the first shares and the auxiliary share, and reconstruct the sharing target data.

According to another aspect of the present invention, a secret sharing method using a secret sharing system, wherein the secret sharing system includes: a share data generation section configured to generate a set of shares by encoding and distributing sharing target data; storage sections each of which is configured to store a corresponding one of the shares; and a data restoration section configured to collect the shares stored in the storage sections, and decode the collected shares and reconstruct the sharing target data in accordance with a predetermined reconstructing shares count; the secret sharing method comprises: a share data generation step to cause the share data generation section to generate, from the sharing target data, a set of first shares corresponding to the reconstructing shares count, and one or two auxiliary shares redundant from the set of first shares, and distribute and store the generated first shares and the generated auxiliary shares in the storage sections; and a reconstruction step to cause the data restoration section to collect the first shares and the auxiliary shares from the storage sections, and when the collected set of first shares satisfies the reconstructing shares count, reconstruct the sharing target data using the collected set of first shares, and when the collected set of first shares does not satisfy the reconstructing shares count, reconstruct the sharing target data using the auxiliary shares; wherein the share data generation step includes: a first step of reading each piece of information from a share data generation function that stores information on the reconstructing shares count ($k$), a count of the auxiliary shares ($r$), a data length ($L$) of the sharing target data, and the sharing target data; a second step of generating a random number and creating a data string ($S$), wherein the data string ($S$) has a number of bytes that is a multiple of a product ($k \times 8$) of the reconstructing shares count and 8, and wherein the data string ($S$) is composed of the generated random number, the data length ($L$), and the sharing target data; and a third step of dividing the data string ($S$) into the product ($k \times 8$) of blocks, applying an operation to each of the divided blocks, and obtaining a share ($W$); wherein the third step employs equations (28) and (29) when the count of auxiliary shares ($r$) is equal to 1,

$$\left(W_{1y}, W_{2y}, W_{3y}, \cdots, W_{ky}, W_{(k+1)y}\right) = \left(S_{1y}, S_{2y}, S_{3y}, \cdots, S_{ky}\right)G \qquad \cdots (28)$$

where $S_{xy}$ represents an xth value (x = 1, 2, 3...k) of a block with a block number y, having a size of 8 bytes,

$W_{zy}$ represents a value of one of the shares of a block with the block number y and a share number z (z = 1, 2, 3...k), having a size of 8 bytes, and
$W_{(k+1)y}$ represents the auxiliary share, and

$$G = \begin{bmatrix} \alpha & 1 & 1 & \cdots & 1 & 1 & 1 \\ 1 & \alpha & 1 & \cdots & 1 & 1 & \alpha^2 \\ 1 & 1 & \alpha & \cdots & 1 & 1 & \alpha^4 \\ \vdots & \vdots & \vdots & \ddots & \vdots & \vdots & \vdots \\ 1 & 1 & 1 & \cdots & \alpha & 1 & \alpha^{2(k-2)} \\ 1 & 1 & 1 & \cdots & 1 & \alpha & \alpha^{2(k-1)} \end{bmatrix} \qquad \cdots (29)$$

; and

wherein the third step employs equations (30) and (31) when the count of auxiliary shares (r) is equal to 2,

$$\left(W_{1y}, W_{2y}, W_{3y}, \cdots, W_{ky}, W_{(k+1)y}, W_{(k+2)y}\right) = \left(S_{1y}, S_{2y}, S_{3y}, \cdots, S_{ky}\right)G \qquad \cdots (30)$$

where $S_{xy}$ represents an xth value (x = 1, 2, 3...k) of a block with a block number y, having a size of 8 bytes,

$W_{zy}$ represents a value of one of the shares of a block with the block number y and a share number z (z = 1, 2, 3...k), having a size of 8 bytes, and
$W_{(k+1)y}$ and $W_{(k+2)y}$ represent the auxiliary shares, and

$$G = \begin{bmatrix} \alpha & 1 & 1 & \cdots & 1 & 1 & 1 & 1 \\ 1 & \alpha & 1 & \cdots & 1 & 1 & \alpha^2 & \alpha^3 \\ 1 & 1 & \alpha & \cdots & 1 & 1 & \alpha^4 & \alpha^6 \\ \vdots & \vdots & \vdots & \ddots & \vdots & \vdots & \vdots & \vdots \\ 1 & 1 & 1 & \cdots & \alpha & 1 & \alpha^{2(k-2)} & \alpha^{3(k-2)} \\ 1 & 1 & 1 & \cdots & 1 & \alpha & \alpha^{2(k-1)} & \alpha^{3(k-1)} \end{bmatrix} \qquad \cdots (31)$$

According to a further aspect of the present invention, a secret sharing system comprises: a share data generation section configured to generate a set of shares by encoding and distributing sharing target data; storage sections each of which is configured to store a corresponding one of the shares; and a data restoration section configured to collect the shares stored in the storage sections, and decode the collected shares and reconstruct the sharing target data in accordance with a predetermined reconstructing shares count; wherein the share data generation section is configured to generate, from the sharing target data, a set of first shares corresponding to the reconstructing shares count, and an auxiliary share redundant from the set of first shares, and distribute and store the generated first shares and the generated auxiliary share in the storage sections; and wherein the data restoration section is configured to: collect the first shares and the auxiliary share from the storage sections; when the collected set of first shares satisfies the reconstructing shares count, reconstruct the sharing target data using the collected set of first shares; and when the collected set of first shares does not satisfy the reconstructing shares count, determine an unavailable one of the first shares based on available ones of the first shares and the auxiliary share, and reconstruct the sharing target data.

The present invention may be implemented by a secret sharing program for causing a computer to execute the secret sharing method.

**Advantageous Effects of Invention**

According to the present invention, it is possible to provide a secret sharing scheme capable of ensuring both confidentiality and availability.

## Brief Description of Drawings

FIG. 1 is a conceptual diagram illustrating a secret sharing scheme.

FIG. 2 is a diagram illustrating a (k, n) threshold scheme.

FIG. 3 is a graph showing a principle of restoration of secret information S.

FIG. 4 is a graph showing a case where restoration is impossible.

FIG. 5 is a diagram showing a system configuration that implements a secret sharing scheme according to an embodiment of the present invention.

FIG. 6 is a diagram showing a computer configuration according to the embodiment.

FIG. 7 is a conceptual diagram showing a system process according to the embodiment.

FIG. 8 is a diagram showing operations in a distribution step according to the embodiment.

FIG. 9 is a diagram showing operations of manipulation for independence and identical distribution according to the embodiment.

FIG. 10 is a diagram showing operations in a restoration step according to the embodiment.

## Mode(s) for Carrying Out Invention

The following describes a secret sharing scheme according to an embodiment of the present invention. This secret sharing scheme relates to a k-multiplex (k, k+1) and (k, k+2) threshold scheme, which is an application of the MSSS of non-patent document 12. This is henceforth referred to as "Advanced Multiplex Secret Sharing Scheme" or "AMSSS" for short.

<Description of AMSSS> First, the following describes a basic concept of secret sharing schemes. For implementing a library for secret sharing schemes, the following provides a listing of items to be taken into consideration:

A: The size of data to be shared (sharing target data),

B: The number of distributions (shares count),

C: How to handle shares used for data reconstruction,

D: A processing time (speed) required for secret sharing and a processing time (speed) required for reconstruction,

E: Required strength of security such as randomness,

F: The nature of errors expected during operation,

G: Attacks expected against library functions and applications using the library functions, and

H: When provided to users as a product, security and functions required to be guaranteed, functions required to be supported, and functions required to be intentionally limited or removed to prevent user confusion and poor response.

With regard to item H in particular, it is required to consider availability requirements. Namely, for implementing a secret sharing scheme, it is required to satisfy security requirements and availability requirements which are in conflict with each other in general as described above.

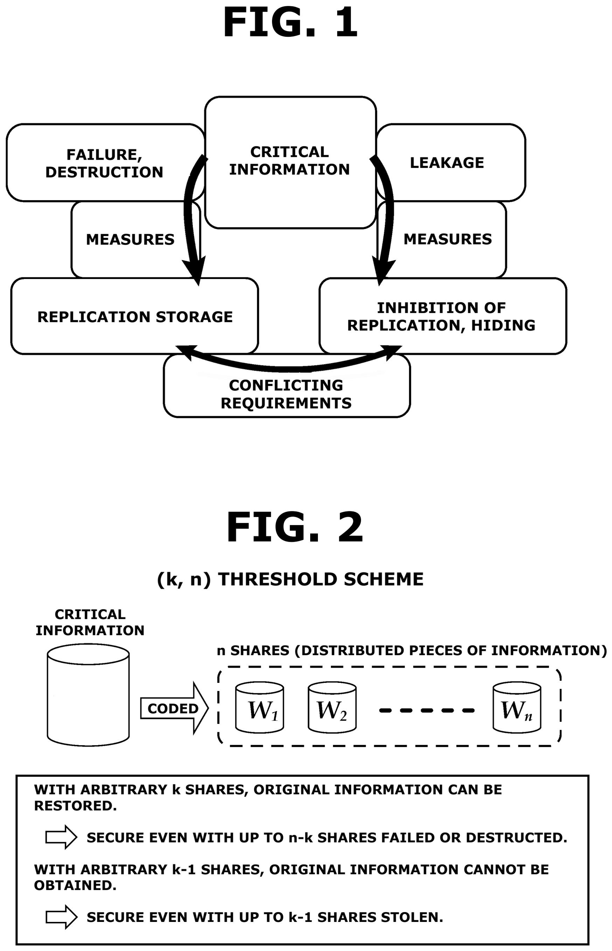

The following discusses risks to critical information with reference to FIG. 1. It is natural to expect risks of information being lost due to failure and destruction, and risks of information being taken by unwanted parties due to leakage.

Redundancy is an effective way to prepare for failure and destruction. Namely, replicas are made to diversify such risks. On the other hand, to address the risk of leakage, it is desirable to avoid replication because such replication increases the risk of leakage. Furthermore, it is desirable to ensure that no information is leaked even with partial taking.

The former requires a measure for increasing availability, and the latter requires a measure for increasing confidentiality, which two requirements are contradictory to each other in general. This dilemma can be alleviated with a secret sharing scheme as described in non-patent documents 1 and 2.

1. Overview of secret sharing schemes

As shown in non-patent document 9, information security measures are required to achieve confidentiality, availability, and integrity. In FIG. 1, measures against leakage correspond to realizing confidentiality, and measures against failure and destruction correspond to realizing availability.

Confidentiality requirements and availability requirements are in conflict with each other in general. Accordingly, implementation requires considerable technology. Usually, cryptography is used to give a high priority to confidentiality. However, in consideration of compromise of cryptography and achievement of availability, secret sharing schemes are superior.

(1) Shamir's secret sharing scheme

Non-patent document 1 discloses a (k, n) threshold scheme (n>k≥2) as a secret sharing scheme. Intuitively, this scheme is based on a theorem that there is only one function of a degree k or less that passes through (k+1) different points on an x, y plane.

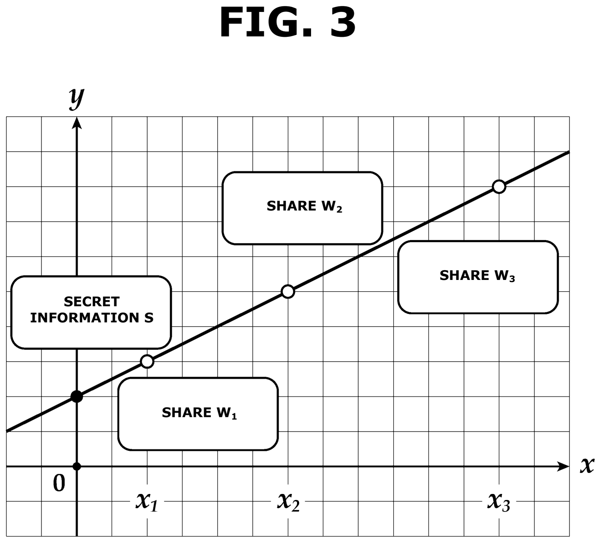

For example, as shown in FIG. 3, with k = 1, secret information (sharing target data) S is placed on the y-axis, a straight line is drawn with a gradient of "a" through a point (0, S), and a different point $x_i$ (i = 1, n) is given on the x-axis. The y-coordinate value $y_i$ (i = 1, n) of the corresponding point on the straight line can be calculated using equation (1).

$$y_i = S + ax_i \qquad \cdots (1)$$

Here, i = 1, n (n ≡ [share number]), and a is an arbitrary number. As shown in equation (2), a combination of each $x_i$ and $y_i$ corresponding to the each xi is used as a share.

$$W_i = (x_i, y_i) \qquad \cdots (2)$$

For restoration, as shown in equations (3-1) and (3-2), two shares $W_p$ and $W_r$ with different share numbers are arbitrarily selected and combined to eliminate "a." In this way, the secret information S is obtained as shown in equation (4).

$$y_p = a \times x_p + S \qquad \cdots (3\text{-}1)$$

$$y_r = a \times x_r + S \qquad \cdots (3\text{-}2)$$

$$S = \frac{x_p y_r - x_r y_p}{x_p - x_r} \qquad \cdots (4)$$

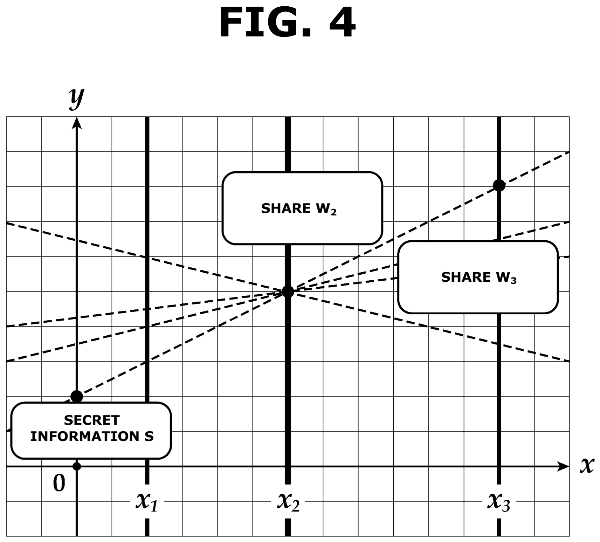

On the other hand, as shown in FIG. 4, with only one share, no straight line can be fixed, so that the secret information S cannot be restored. When the threshold value k is 3 or more, the function used is a (k-1)th order function, namely, f(t): a (k-1)th order function of t.

The above example is given on the real plane for the sake of intuitive understanding. However, in program implementation, calculations are carried out over a finite field, namely, a Galois field: GF(q). First, as shown below, secret information to be shared is represented by S, and a set of random elements used for secret sharing encoding is represented by U.

- Secret information: S ∈ GF(q)
- Random elements: U=($U_1$, $U_2$, $U_3$, ..., $U_{k-1}$ ∈ GF(q)) Using these, f(t) is defined by equation (5).

$$f(t) = S + U_1 t + U_2 t^2 + \cdots + U_{k-1} t^{k-1} \qquad \cdots (5)$$

With $\alpha_i$ ∈ GF(q), i=1, 2, ..., n (where $\alpha_i \neq \alpha_j$ for i ≠ j), encoding into shares {$W_1$, $W_2$, $W_3$, ..., $W_n$} and decoding are performed as follows:

Encoding: Wi = f($\alpha_i$) ∈ GF(q), and
Decoding: Ik = {$i_1$, $i_2$, $i_3$, ..., $i_k$}, by Lagrange interpolation.

$$f(t) = \sum_{i \in \mathcal{I}_k} f(\alpha_i) F_i(t) \qquad \cdots (6\text{-}1)$$

$$F_i(t) = \prod_{i' \in \mathcal{I}_k \setminus \{i\}} \frac{t - \alpha_{i'}}{\alpha_i - \alpha_{i'}} \qquad \cdots (6\text{-}2)$$

From equation (5), S = f(0). Accordingly, it is possible to decode using equation (7) based on equation (6-2).

$$S = f(0) = \sum_{i \in \mathcal{I}_k} W_i \prod_{i' \in \mathcal{I}_k \setminus \{i\}} \frac{-\alpha_{i'}}{\alpha_i - \alpha_{i'}} \qquad \cdots (7)$$

(2) Characteristics of threshold schemes

According to such a (k, n) threshold scheme, f(t) can be determined using any k shares, and S can be thereby restored. On the other hand, S is completely unknown with any k-1 shares.

Furthermore, even when n-k shares are lost, S can be restored, and even when k-1 shares are stolen, there is no possibility that the information S is leaked. Namely, with regard to preservation of S, availability is guaranteed, and confidentiality is also guaranteed. With this feature, attempts are being made to distribute critical PKI information, control access rights (non-patent documents 4 to 6), and protect cryptocurrencies (non-patent document 3).

2. Secret sharing scheme and total data size

In the (k, n) threshold secret sharing scheme, secret information S is encoded into n shares $W_j$, j=1, 2, ..., n. On the other hand, each $W_j$ is required to have a bit length (data size) at least equal to that of S.

Accordingly, the total data size of all the shares is n times the data size of S. This characteristic causes no problem when the size of the sharing target data is small, since storing the shares requires a relatively small cost.

On the other hand, problems arise when a large size of data is to be stored in a distributed manner. In other words, the cost of storing a shares count times the large data size of the original data is very large. Therefore, for practical use, it is important to take a scheme to reduce the total size of data.

(1) Sharing scheme and data size

For secret sharing schemes, non-patent document 2 proposes a scheme for reducing the size of data, and a scheme for simplifying calculations.

The former is proposed as a (k, L, n) ramp threshold secret sharing scheme (scheme 3 in Table 1) based on Shamir-type configuration. On the other hand, the latter is proposed as a (n, n) threshold secret sharing scheme (scheme 2 in Table 1).

[Table 1]

| The type of calculation of secret sharing schemes, and the total data size with n shares | | | |
|---|---|---|---|
| | Schemes | Calculation | Total data size |
| 1 | (k, n) threshold scheme, non-patent documents 2 and 10 | (k-1)th order formula, matrix calculation, over finite field | n times |
| 2 | (n, n) threshold scheme, non-patent document 2 | Addition and subtraction over finite module | n times |
| 3 | (k, L, n) ramp threshold scheme, non-patent documents 2 and 10 | (k-1)th order formula, matrix calculation, over finite field | n/L times |
| 4 | Security-enhanced (k, L, n) ramp threshold scheme, non-patent documents 10 and 11 | Matrix calculation over finite field | n/L times |
| 5 | Security-enhanced (n, n, n) ramp threshold scheme, non-patent documents 10 and 11 | Matrix calculation over finite field | Same size |
| 6 | n-multiplex (n, n) scheme, non-patent document 12 | Addition, subtraction, and multiplication over finite field | Same size |
| 7 | Security-enhanced (n-1, n-1, n) ramp threshold scheme, non-patent documents 10 and 11 | Matrix calculation over finite field | n/(n-1) times |
| 8 | (n-1)-multiplex (n-1, n) threshold scheme, non-patent document 12 | Addition, subtraction, and multiplication over finite field | n/(n-1) times |

According to the former, the sharing results in a total data size that is n/L times the data size of the secret information S. In this way, the total data size can be reduced to 1/L of the Shamir-type (k, n) threshold secret sharing scheme.

However, in the Shamir-type, setting of L=n may cause a risk that security against leakage cannot be guaranteed. Accordingly, the total size of shares always exceeds the data size of S. On the other hand, with the scheme of non-patent documents 10 and 11 (scheme 5 in Table 1), it is possible to set k=L=n, and it is possible to encode such that the total data size of the shares is equal to the data size of S. However, this scheme has a drawback of requiring a large amount of calculation. Furthermore, although the use of the (n, n) threshold secret sharing scheme requires a very small amount of calculation, this scheme has a drawback that, like the Shamir-type scheme, the total data size cannot be reduced as in the ramp type but is increased to be n times the data size of S.

In view of the foregoing, according to schemes 1 to 5 in Table 1, it is difficult to achieve both a reduction in the size of data and a reduction in the amount of calculation. In contrast, the MSSS of non-patent document 12 (scheme 6 in Table 1) has an advantage of being superior in both the amount of calculation and data reduction performance, as reported in non-patent document 13 for its results of implementation.

(2) Consideration of schemes with creation of auxiliary shares

According to scheme 6 in Table 1, it is impossible to restore the original secret information S unless all shares are collected (when even one share is missing). This characteristic is natural in view of information theory, since the total data size of the shares is equal to the data size of S.

However, for applications such as backup systems for large amounts of data, this scheme has a drawback for system design as it cannot address the risk of failure or destruction. Therefore, it is desirable to present a scheme that allows creation of auxiliary shares.

It is true that the above problem can be solved by using the (k, L, n) threshold scheme, or the k-multiplex (k, n) threshold scheme, which are general and strongly secure. However, use of those schemes may cause a risk of increase in the amount of calculation required for encoding and decoding.

On the other hand, practically, it is often sufficient that the count of auxiliary shares (n-k) is about 1 or 2. Therefore, in the following, it is preferable to derive auxiliary shares by the k-multiplex (k, n) threshold, namely, the AMSSS, for cases of n-k=1, 2.

3. Encoding and decoding using AMSSS

For encoding and decoding calculations using the AMSSS, a number field of $q = 2^m$ is used, where m>3k, and "$\alpha$" is a primitive element of GF(q). A k $\times$ (k+2) matrix G is defined by equation (8).

$$G = \begin{bmatrix} \alpha & 1 & 1 & \cdots & 1 & 1 & 1 & 1 \\ 1 & \alpha & 1 & \cdots & 1 & 1 & \alpha & \alpha^2 \\ 1 & 1 & \alpha & \cdots & 1 & 1 & \alpha^2 & \alpha^4 \\ \vdots & \vdots & \vdots & \ddots & \vdots & \vdots & \vdots & \vdots \\ 1 & 1 & 1 & \cdots & \alpha & 1 & \alpha^{k-2} & \alpha^{2(k-2)} \\ 1 & 1 & 1 & \cdots & 1 & \alpha & \alpha^{k-1} & \alpha^{2(k-1)} \end{bmatrix} . \qquad \cdots (8)$$

In calculation of GF($2^m$), -1 = 1. Accordingly, all "-" signs can be replaced with "+" signs for subtraction in equations.

(1) Encoding calculation (encoding calculation for two auxiliary shares)

First, the secret information is represented by $(S_1, S_2, ..., S_k)$, $S_i \in$ GF(q), and the shares are represented by $(W_1, W_2, ..., W_{k+1}, W_{k+2})$, $W_j \in$ GF(q), and G is defined as a k $\times$ (k+2) matrix whose elements have values in GF(q). In light of the foregoing, encoding is performed using equation (9).

$$(W_1, W_2, \cdots, W_{k+1}, W_{k+2}) = (S_1, S_2, \cdots, S_k)G \qquad \cdots (9)$$

With regard to matrix G in equation (8) and $e_i^T = [\overbrace{0, \cdots, 0}^{i-1}, 1, \overbrace{0, \cdots, 0}^{k-i}]$ (T representing

transposition), a k × (k+1) matrix $\tilde{G}_i$ is defined as $\tilde{G}_i = [e_i\ G]$. For realizing a k-multiplex (k, k+2) threshold scheme by equation (9), with respect to an arbitrary value i ($1 \leq i \leq k$), an arbitrary kth column of $\tilde{G}_i$ is required to be linearly independent. This requirement is satisfied with k ≥ 4, but is not satisfied with k = 2, 3. Accordingly, matrix G is set as follows.

$$G = \begin{bmatrix} \alpha & 1 & 1 & \cdots & 1 & 1 & 1 & 1 \\ 1 & \alpha & 1 & \cdots & 1 & 1 & \alpha^2 & \alpha^3 \\ 1 & 1 & \alpha & \cdots & 1 & 1 & \alpha^4 & \alpha^6 \\ \vdots & \vdots & \vdots & \ddots & \vdots & \vdots & \vdots & \vdots \\ 1 & 1 & 1 & \cdots & \alpha & 1 & \alpha^{2(k-2)} & \alpha^{3(k-2)} \\ 1 & 1 & 1 & \cdots & 1 & \alpha & \alpha^{2(k-1)} & \alpha^{3(k-1)} \end{bmatrix} . \qquad \cdots (10)$$

In light of the foregoing, $W_j$, j=1, 2, ..., k, can be calculated using equations (11) and (12).

$$V = \sum_{i=1}^{k} S_i \qquad \cdots (11)$$

$$W_j = (\alpha - 1)S_j + V, \text{ for } j = 1, 2, \cdots k \qquad \cdots (12)$$

Furthermore, $W_{k+1}$ and $W_{k+2}$ can be calculated from equations (9) and (10) using equations (13) and (14).

$$W_{k+1} = \sum_{i=1}^{k} \alpha^{2(i-1)} S_i \qquad \cdots (13)$$

$$W_{k+2} = \sum_{i=1}^{k} \alpha^{3(i-1)} S_i \qquad \cdots (14)$$

(2) Decoding calculation (decoding calculation for two auxiliary shares)

Next, the following discusses decoding. With $W_1$, $W_2$, ..., $W_k$ given, $S_1$, $S_2$, ..., $S_k$ can be calculated by equations (15) and (16).

$$\widehat{V} = \sum_{j=1}^{k} W_j \qquad \cdots (15)$$

$$S_i = \begin{cases} \left[ W_i - (\alpha - 1)^{-1} \widehat{V} \right] (\alpha - 1)^{-1}, & \text{if } k \text{ is even} \\ \left[ W_i - \alpha^{-1} \widehat{V} \right] (\alpha - 1)^{-1}, & \text{if } k \text{ is odd} \end{cases} \qquad \cdots (16)$$

The relationship of equation (16) can be obtained from equations (11), (12), and (15) because the relationship of equation (17) holds.

$$\widehat{V} = \begin{cases} (\alpha - 1)V & \text{if } k \text{ is even} \\ \alpha V & \text{if } k \text{ is odd} \end{cases} \qquad \cdots (17)$$

Also, the following discusses decoding with $W_{k+1}$. $W_{k+1}$ is calculated from equations (9) to (16) using equation (18) (for a case where k is an even number. When k is odd, it is sufficient that $(\alpha-1)^{-1}$ is simply converted to $\alpha^{-1}$ according to

equation (16).).

$$W_{k+1} = \sum_{i=1}^{k} S_i \alpha^{2(i-1)}$$

$$= \sum_{i=1}^{k} \left[ W_i - (\alpha-1)^{-1}\widehat{V} \right] (\alpha-1)^{-1} \alpha^{2(i-1)}$$

$$= (\alpha-1)^{-1} \left[ \sum_{i=1}^{k} \alpha^{2(i-1)} W_i \right] - (\alpha-1)^{-2}\widehat{V} \sum_{i=1}^{k} \alpha^{2(i-1)}$$

$$= (\alpha-1)^{-1} \left[ \sum_{i=1}^{k} \alpha^{2(i-1)} W_i \right] - (\alpha-1)^{-2}\widehat{V} \frac{\alpha^{2k}-1}{\alpha^2-1}$$

$$= (\alpha-1)^{-1} \left[ \sum_{i=1}^{k} \alpha^{2(i-1)} W_i \right] - (\alpha-1)^{-4}(\alpha^{2k}-1) \sum_{i=1}^{k} W_i$$

$$= (\alpha-1)^{-1} \sum_{i=1}^{k} \left[ \alpha^{2(i-1)} - (\alpha-1)^{-3}(\alpha^{2k}-1) \right] W_i \qquad \cdots (18)$$

Furthermore, $\beta_k$ is defined by equation (19).

$$\beta_k = \begin{cases} (\alpha-1)^{-3}(\alpha^{2k}-1), & \text{if } k \text{ is even} \\ \alpha^{-1}(\alpha-1)^{-2}(\alpha^{2k}-1), & \text{if } k \text{ is odd} \end{cases} \qquad \cdots (19)$$

In light of the foregoing, $W_{k+1}$ is given by equation (20).

$$W_{k+1} = (\alpha-1)^{-1} \sum_{i=1}^{k} (\alpha^{2(i-1)} - \beta_k) W_i \qquad \cdots (20)$$

Similarly, $\gamma_k$ is defined by equation (21).

$$\gamma_k = \begin{cases} (\alpha-1)^{-1}(\alpha^3-1)^{-1}(\alpha^{3k}-1), & \text{if } k \text{ is even} \\ \alpha^{-1}(\alpha^3-1)^{-1}(\alpha^{3k}-1), & \text{if } k \text{ is odd} \end{cases} \qquad \cdots (21)$$

In light of the foregoing, $W_{k+2}$ is given by equation (22).

$$W_{k+2} = (\alpha-1)^{-1} \sum_{i=1}^{k} (\alpha^{3(i-1)} - \gamma_k) W_i \qquad \cdots (22)$$

(3) Restoration when intermediate shares are corrupted (lost).

The following describes a decoding scheme when one or two $W_j$, $1 \leq j \leq k$, are lost, for cases 1 and 2 separately.
<Case 1> When one Wa, $1 \leq a \leq k$, is unavailable, the decoding scheme is to determine Wa using equation (23) or equation (24) and then decode using equation (16).

$$W_a = (\alpha^{2(a-1)} - \beta_k)^{-1} \left( (\alpha-1)W_{k+1} - \sum_{i=1, i \neq a}^{k} (\alpha^{2(i-1)} - \beta_k) W_i \right) \qquad \cdots (23)$$

$$W_a = (\alpha^{3(a-1)} - \gamma_k)^{-1}\left((\alpha - 1)W_{k+2} - \sum_{i=1,i\neq a}^{k} (\alpha^{3(i-1)} - \gamma_k)W_i\right) \qquad \cdots (24)$$

<Case 2> When $W_a$, $W_b$, $1\leq a\leq b\leq k$, are unavailable, definitions are set by equations (25) and (26) for the decoding scheme.

$$U_{2,a,b} = \sum_{i=1,i\neq a,i\neq b}^{k} (\alpha^{2(i-1)} - \beta_k)W_i \qquad \cdots (25)$$

$$U_{3,a,b} = \sum_{i=1,i\neq a,i\neq b}^{k} (\alpha^{3(i-1)} - \gamma_k)W_i \qquad \cdots (26)$$

$$W_a = \frac{A_1 - A_2}{B_1 - B_2} \qquad \cdots (27\text{-}1)$$

$$W_b = \frac{C_1 - C_2}{D_1 - D_2} \qquad \cdots (27\text{-}2)$$

$$A_1 = (\alpha^{3(b-1)} - \gamma_k)((\alpha - 1)W_{k+1} - U_{2,a,b})$$

$$A_2 = (\alpha^{2(b-1)} - \beta_k)((\alpha - 1)W_{k+2} - U_{3,a,b})$$

$$B_1 = (\alpha^{3(b-1)} - \gamma_k)(\alpha^{2(a-1)} - \beta_k)$$

$$B_2 = (\alpha^{2(b-1)} - \beta_k)(\alpha^{3(a-1)} - \gamma_k)$$

$$C_1 = (\alpha^{3(a-1)} - \gamma_k)((\alpha - 1)W_{k+1} - U_{2,a,b})$$

$$C_2 = (\alpha^{2(a-1)} - \beta_k)((\alpha - 1)W_{k+2} - U_{3,a,b})$$

$$D_1 = (\alpha^{3(a-1)} - \gamma_k)(\alpha^{2(b-1)} - \beta_k)$$

$$D_2 = (\alpha^{2(a-1)} - \beta_k)(\alpha^{3(b-1)} - \gamma_k)$$

In light of the foregoing, $W_a$ and $W_b$ are calculated by equation (27), and thereafter, equation (16) is used for decoding.

The foregoing deals with the k-multiplex (k, k+2) threshold scheme. For the k-multiplex (k, k+1) threshold scheme, $W_{k+2}$ can be omitted. Specifically, the encoding is performed without the calculation of equations (21) and (22), and the decoding is performed with equations (15) and (16), and equation (23) for case 1.

Due to the asymmetry of the matrix G in equation (10) used for encoding, the decoding can be performed quickly with $W_1$, $W_2$, ..., $W_k$ given, but without them, the decoding requires a slightly longer time. Therefore, when all of $W_1$, $W_2$, ..., $W_k$, $W_{k+1}$, $W_{k+2}$ are available, high-speed decoding can be performed using $W_1$, $W_2$, ..., $W_k$.

(3) Recovery procedure depending on which share is missing.

K+2 shares are generated. Even when two of them are lost, the original information S can be restored. The restoration procedure differs depending on which share is lost, as in cases 1 and 2. However, in either case, the original information S can be restored (reconstructed) by matrix calculation.

**First Embodiment**

The following describes an embodiment of application in which the AMSSS is applied to a backup system of a data center. In view of system design, when a secret sharing scheme is adopted in a backup system for a large size of data, there is a risk of difficulty of data restoration without auxiliary shares. Therefore, in this embodiment, construction of a backup system using auxiliary shares is implemented with the AMSSS, an advanced version of the MSSS (scheme 6 in Table 1), to achieve redundancy of data among shares. If conventional technology (e.g., scheme 7 in Table 1) is used to implement a threshold secret sharing scheme identical in function to the present embodiment, it is required to perform complex calculations such as calculation of the Vandermonde determinant shown in equation 27 in non-patent document 10, resulting in a large amount of calculation and thereby resulting in difficulty in proceeding to practical use. The present embodiment is targeted mainly for solving this problem, and is based on the AMSSS, which is an advanced version of the MSSS (scheme 6 in Table 1). Accordingly, the calculation of equation 10 is sufficient, realizing high-speed processing and facilitating implementation.

<Example of System Configuration>

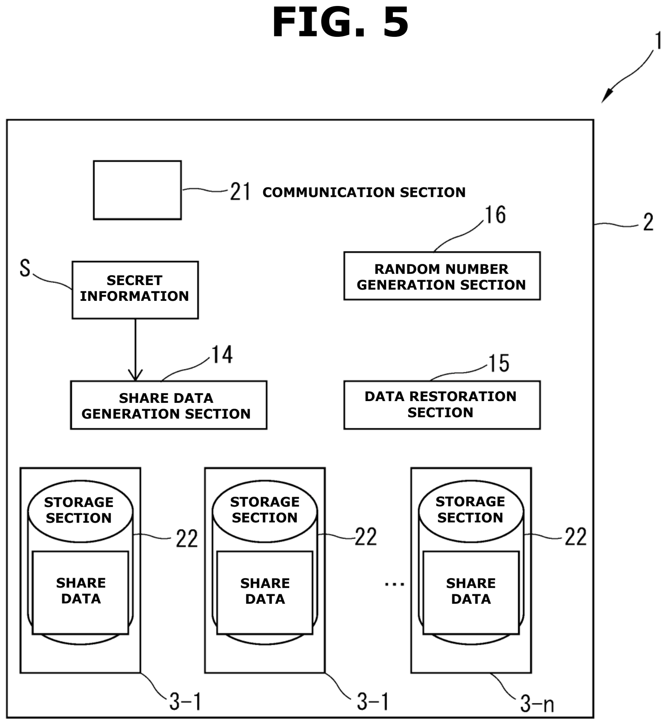

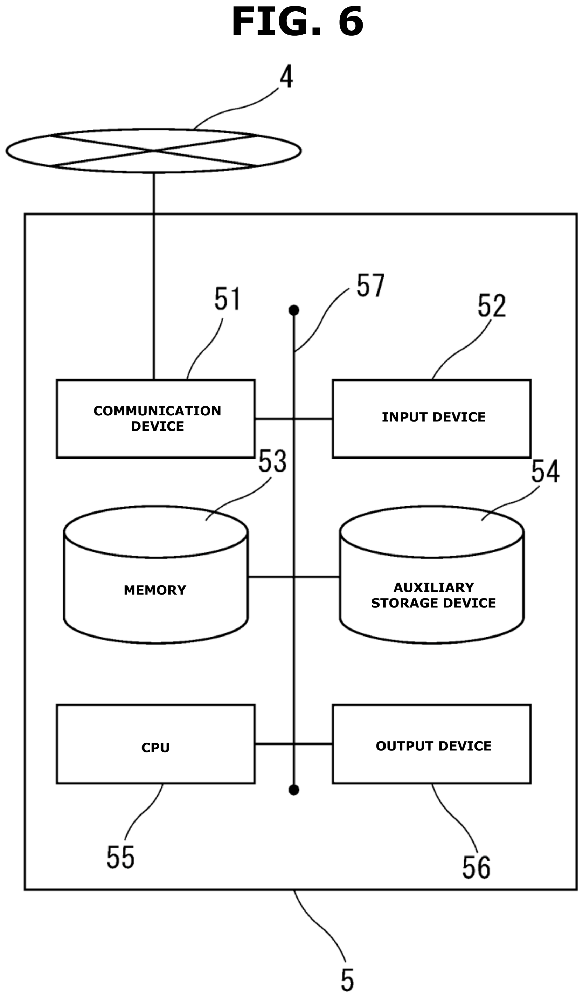

The following describes an example of configuration of a secret sharing system that executes the secret sharing scheme according to this embodiment with reference to FIGS. 5 and 6. This system 1 is built in a data center for cloud-based storage service, and employs the AMSSS and thereby takes advantage of the high speed of the multiplex secret sharing scheme (MSSS) while creating one or two auxiliary shares. In this embodiment, when a required count of shares are all collected (when all shares exist), the sharing target data is reconstructed based on the collected shares. On the other hand, when all the required count of shares are not collected (when any shares are missing), the missing share is restored based on the collected (existing) shares and auxiliary shares, and the sharing target data is thereafter reconstructed.

Specifically, as shown in FIG. 5, the system 1 is composed of a storage server device 2 connected to a network 4 (see FIG. 6). The storage server device 2 may be provided solely, or alternatively, a system may be composed of multiple storage server devices 2. FIG. 5 shows a system configuration as an example, which employs a single storage server device 2.

The storage server device 2 includes a communication section 21, storage devices 3 - 1 to 3-n, a share data generation section 14, a data restoration section 15, and a random number generation section 16. This share data generation section 14 generates a set of shares of data (multiple shares and auxiliary shares) by encoding and distributing the sharing target data (secret information S), and distributes and stores the shares in corresponding storage sections 22 of the storages 3-1 to 3-n. When a set of multiple storage servers 2 is used, the share data can be distributed and stored in storages 3 of the storage servers 2.

For restoring the secret information S, the data restoration section 15 collects the shares of data from the storages 3-1 to 3-n and restores the sharing target data. However, as shown in non-patent document 13, shares are transferred via communication and written to and read from memory, so that the shares cannot be assumed to be error-free and may undergo omissions or defects. Accordingly, it is commonly recognized by those skilled in the art that some kind of error detection means should be added at the application level. Therefore, in this embodiment, each share additionally contains an error detection code (EDC), namely, a checksum, for error checking.

When the collected shares are free of any missing or defect and satisfy the required count, the secret information S is restored from the collected shares. On the other hand, when the collected shares encounter missing or defects and fail to satisfy the required count, the unavailable (missing or defective) shares are determined using the available shares and auxiliary shares, and the secret information S is thereafter restored.

The random number generation section 16 generates a random number (8 bytes) in response to a command from the share data generation section 14. As shown in FIG. 6, the storage server device 2 includes a computer as a main component, and includes a communication device 51, an input device 52, a memory (main storage device) 53, an auxiliary storage device (SSD, HDD, etc.) 54, a CPU 55, and an output device 56. Each piece of hardware 51 to 56 is connected to each other via a bus 57. The sections 3, 14, 15, 16, 21, and 22 are implemented through cooperation among pieces of hardware and pieces of software.

<Operation of share data generation section 14 and data restoration section 15>

The share data generation section 14 has a share data generation function (called "amsss_generate") that generates shares and auxiliary shares from the sharing target data (secret information S).

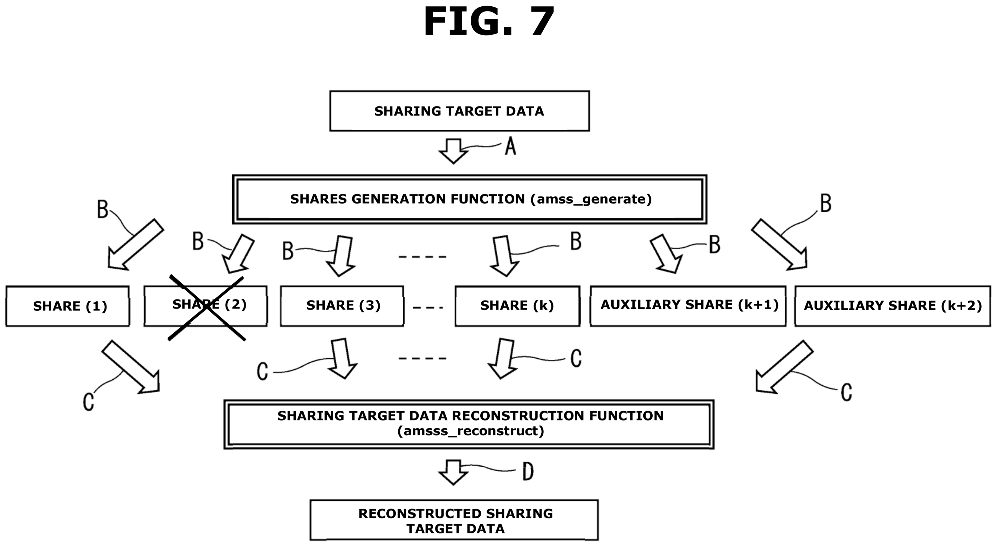

On the other hand, the data restoration section 15 has a reconstruction function (called "amsss_reconstruct") that reconstructs and restores the sharing target data using the shares and auxiliary shares. The share data generation function and the reconstruction function are based on the AMSSS. The following describes details with reference to FIG. 7.

(1) Share data generation function

The share data generation section 14 uses the share data generation function to generate shares (1) to (k) and auxiliary shares (k+1) and (k+2) from the sharing target data, as shown by arrows A and B in FIG. 7.

The share data generation function stores the shares of the sharing target data (secret information S) in a starting address Si (unsigned char*Si) of a one-dimensional array of arguments (inputs), and sets the following information in accordance with specifications:

A: The count of shares required to reconstruct the sharing target data (a so-called threshold in a range of 2 to 6, henceforth referred to as "reconstructing shares count"),
B: The count of auxiliary shares (in a range of 1 to 2, henceforth referred to as "auxiliary shares count"), and
C: The data length of the sharing target data (in a range of 1 to 250 bytes).

Furthermore, the share data generation function sets a share number (1 byte) + share data (total number of blocks x 8 bytes) in each row of the starting address of a two-dimensional array of arguments (outputs) Sni (unsigned char*Sni).

The total number of blocks is calculated as ([length of sharing target data] + 16) / ([reconstructing shares count] x 8). Here, the quantity of ([length of sharing target data] + 16) / ([reconstructing shares count] x 8) represents a number rounded up to the nearest whole number. In this embodiment, a hash value is used as a checksum for each share data. Calculating hash values to check the identity of files is regarded as a well-known technique for those skilled in the art which is disclosed in publicly known documents such as non-patent document 15. As described below, this is employed as a means for confirming whether the shares are normal or abnormal. For example, when the reconstructing shares count is three, the auxiliary shares count is two, and the two-dimensional array is represented by Sni, then:

Sni[0]: Share number 1 + share data (share) of share number 1 + hash value,
Sni[1]: Share number 2 + share data (share) of share number 2 + hash value,
Sni[2]: Share number 3 + share data (share) of share number 3 + hash value,
Sni[3]: Share number 4 + share data (auxiliary share) of share number 4 + hash value, and
Sni[4]: Share number 5 + share data (auxiliary share) of share number 5 + hash value.

Accordingly, the number of rows and the number columns of the two-dimensional array are:

- the number of rows of the two-dimensional array = [reconstructing shares count] + [auxiliary shares count], and
- the number of columns of the two-dimensional array = [total number of blocks] x 8 + 1 (bytes).

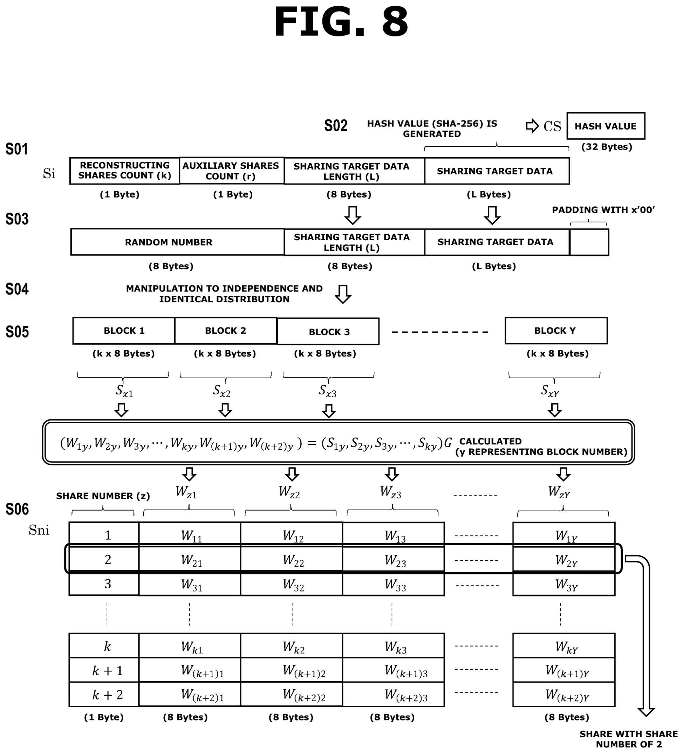

The following describes operations S01 to S06 of the share data generation function with reference to FIG. 8.

S01: When a process is started, the share data generation section 14 reads the reconstructing shares count (k: 1 byte), the auxiliary shares count (r: 1 byte), the data length of the sharing target data (L: 8 bytes), and the sharing target data (L bytes), which are set in the one-dimensional array Si of the share data generation function.

S02: The hash value (SHA-256 by OpenSSL) of the sharing target data is calculated. The calculated hash value is set to a starting address CS (unsigned char*CS) of a one-dimensional array of the share data generation function.

S03: A command is output to the random number generation section 16 to generate a random number (8 bytes) based on a time instant. The random number is generated using a function "clock_gettime()" for getting a time instant.

The generated random number is used to create a data string of [random number] + [data length L of sharing target data] + [sharing target data]. When the created data string has a number of bytes other than a multiple of k x 8, the data string is adjusted to a multiple of k x 8 by padding the end of the data string with x'00'.

S04: The data string created at S03 is manipulated to be independent and identically distributed as described below.

S05: The data string S, which has been manipulated to be independent and identically distributed at S04, is divided into $k \times 8$ blocks. For each divided block, the following calculation is performed on $GF(2^{64})$ of non-patent document 14, to determine the share data $W(W_{zy})$. For this calculation, "a" is defined as a primitive element of $GF(2^{64})$.

Specifically, the auxiliary shares count r read at S01 is checked, and when the auxiliary shares count r=1, then equations (28) and (29) are used.

$$\left(W_{1y}, W_{2y}, W_{3y}, \cdots, W_{ky}, W_{(k+1)y}\right) = \left(S_{1y}, S_{2y}, S_{3y}, \cdots, S_{ky}\right)G \qquad \cdots (28)$$

$$G = \begin{bmatrix} \alpha & 1 & 1 & \cdots & 1 & 1 & 1 \\ 1 & \alpha & 1 & \cdots & 1 & 1 & \alpha^2 \\ 1 & 1 & \alpha & \cdots & 1 & 1 & \alpha^4 \\ \vdots & \vdots & \vdots & \ddots & \vdots & \vdots & \vdots \\ 1 & 1 & 1 & \cdots & \alpha & 1 & \alpha^{2(k-2)} \\ 1 & 1 & 1 & \cdots & 1 & \alpha & \alpha^{2(k-1)} \end{bmatrix} \qquad \cdots (29)$$

On the other hand, when the auxiliary shares count r = 2, then equations (30) and (31) are used.

$$\left(W_{1y}, W_{2y}, W_{3y}, \cdots, W_{ky}, W_{(k+1)y}, W_{(k+2)y}\right) = \left(S_{1y}, S_{2y}, S_{3y}, \cdots, S_{ky}\right)G \qquad \cdots (30)$$

$$G = \begin{bmatrix} \alpha & 1 & 1 & \cdots & 1 & 1 & 1 & 1 \\ 1 & \alpha & 1 & \cdots & 1 & 1 & \alpha^2 & \alpha^3 \\ 1 & 1 & \alpha & \cdots & 1 & 1 & \alpha^4 & \alpha^6 \\ \vdots & \vdots & \vdots & \ddots & \vdots & \vdots & \vdots & \vdots \\ 1 & 1 & 1 & \cdots & \alpha & 1 & \alpha^{2(k-2)} & \alpha^{3(k-2)} \\ 1 & 1 & 1 & \cdots & 1 & \alpha & \alpha^{2(k-1)} & \alpha^{3(k-1)} \end{bmatrix} \qquad \cdots (31)$$

In equations (28) and (29),

$S_{xy}$: xth value of block number y (8 bytes), and
$W_{zy}$: Value of share of block number y and share number z (8 bytes).

In light of the foregoing, $W_{zy}$, z = 1, 2, 3, ...k, is calculated using equations (32) and (33).

$$V = \sum_{x=1}^{k} S_{xy} \qquad \cdots (32)$$

$$W_{zy} = (\alpha - 1)S_{zy} + V, \quad \text{for } z = 1, 2, 3, \cdots, k \qquad \cdots (33)$$

Furthermore, $W_{(k+1)y}$ and $W_{(k+2)y}$ are calculated from equations (28) to (31) using equations (34) and (35).

$$W_{(k+1)y} = \sum_{x=1}^{k} \alpha^{2(x-1)} S_{xy} \qquad \cdots (34)$$

$$W_{(k+2)y} = \sum_{x=1}^{k} \alpha^{3(x-1)} S_{xy} \qquad \cdots (35)$$

S06: For each share data $W_{zy}$ calculated at S05, a hash value is calculated. Thereafter, each share data $W_{zy}$ and its hash value are set in the two-dimensional array Sni of the share data generation function. Specifically, the share data and hash value of share number i are assigned to an i-th row of the two-dimensional array Sni. For example, for the share number 2, the share data and hash value is assigned to the second row of the two-dimensional array Sni.

Then, each share data $W_{zy}$ is distributed and stored in a corresponding one of the storage sections 22 of the storages 3-1 to 3-n. FIG. 8 shows a case where the auxiliary shares count r = 2. When the auxiliary shares count r = 1, the calculation at S05 is performed with equation (28) instead of equation (30), and the last (k+2)th row is removed from the two-dimensional array Sni at S06 so that the (k+1)th row of the two-dimensional array Sni at S06 is the last one.

(2) Details of S04

The MSSS has an algorithmic constraint for achieving security, where for S (secret information: sharing target data) = ($S_{1y}$, $S_{2y}$, ..., $S_{xy}$), each $S_{xy}$ is required to be independent and identically distributed. Accordingly, at S04, a process of manipulation for independence and identical distribution (S11 to S14) is performed as follows.

S11: When the process is started, multiplication is performed with an appropriate matrix over a finite field. For example, as shown in equation (36), elements of matrix A are set to random numbers modulo $2^{64}$ (1 word 64 bits) and its inverse matrix B is calculated. The inverse matrix B can be determined when a determinant |A| has a value relatively prime to $2^{64}$, namely, when the determinant |A| has an odd number.

$$ 行列\ A = \begin{pmatrix} a_{11} & a_{12} & a_{13} \\ a_{21} & a_{22} & a_{23} \\ a_{31} & a_{32} & a_{33} \end{pmatrix} \qquad \cdots (36\text{--}1) $$

$$ 行列\ B = \begin{pmatrix} b_{11} & b_{12} & b_{13} \\ b_{21} & b_{22} & b_{23} \\ b_{31} & b_{32} & b_{33} \end{pmatrix} \qquad \cdots (36\text{--}2) $$

$$ \begin{pmatrix} 1 & 0 & 0 \\ 0 & 1 & 0 \\ 0 & 0 & 1 \end{pmatrix} \equiv \begin{pmatrix} a_{11} & a_{12} & a_{13} \\ a_{21} & a_{22} & a_{23} \\ a_{31} & a_{32} & a_{33} \end{pmatrix} \begin{pmatrix} b_{11} & b_{12} & b_{13} \\ b_{21} & b_{22} & b_{23} \\ b_{31} & b_{32} & b_{33} \end{pmatrix} mod\ 2^{64} \qquad \cdots (36\text{--}3) $$

$$ mod\ 2^{64} = modulo\ 2^{64} $$

S12: For the data string before manipulation for independence and identical distribution, calculation with matrix A is performed modulo $2^{64}$ in order from the front, to generate a new data string.

$$ X^{(1)}\ X^{(2)}\ X^{(3)}\ X^{(4)}\ X^{(5)}\ X^{(6)}\ -----------X^{(M-2)}\ X^{(M-1)}\ X^{(M)} \qquad \cdots (37\text{--}1) $$

$$ \left(Y^{(1)}\ Y^{(2)}\ Y^{(3)}\right) \equiv \left(X^{(1)}\ X^{(2)}\ X^{(3)}\right)A\ mod\ 2^{64} \qquad \cdots (37\text{--}2) $$

$$ Y^{(1)}\ Y^{(2)}\ Y^{(3)}\ X^{(4)}\ X^{(5)}\ X^{(6)}\ ----------\ X^{(M-2)}\ X^{(M-1)}\ X^{(M)} \qquad \cdots (37\text{--}3) $$

$$ \left(Y^{(2)}\ Y^{(3)}\ Y^{(4)}\right) \equiv \left(Y^{(2)}\ Y^{(3)}\ X^{(4)}\right)A\ mod\ 2^{64} \qquad \cdots (37\text{--}4) $$

$$ Y^{(1)}\ Y^{(2)}\ Y^{(3)}\ Y^{(4)}\ X^{(5)}\ X^{(6)}\ -----------\ X^{(M-2)}\ X^{(M-1)}\ X^{(M)} \qquad \cdots (37\text{--}5) $$

$$ Y^{(1)}\ Y^{(2)}\ Y^{(3)}\ Y^{(4)}\ Y^{(5)}\ Y^{(6)}\ ----------\ Y^{(M-2)}\ Y^{(M-1)}\ X^{(M)} \qquad \cdots (37\text{--}6) $$

$$ \left(Y^{(M-2)}\ Y^{(M-1)}\ Y^{(M)}\right) \equiv \left(Y^{(M-2)}\ Y^{(M-1)}\ X^{(M)}\right)A\ mod\ 2^{64} \qquad \cdots (37\text{--}7) $$

$$ Y^{(1)}\ Y^{(2)}\ Y^{(3)}\ Y^{(4)}\ Y^{(5)}\ Y^{(6)}\ ----------\ Y^{(M-2)}\ Y^{(M-1)}\ Y^{(M)} \qquad \cdots (37\text{--}8) $$

The following describes an example of processing with reference to equation (37). Here, data string X ($X^{(1)}X^{(2)}$

$X^{(3)}X^{(4)}X^{(5)}X^{(6)}...X^{(M-2)}X^{(M-1)}X^{(M)})$ represents a data string before manipulation for independence and identical distribution, and Y ($Y^{(1)}Y^{(2)}Y^{(3)}Y^{(4)}Y^{(5)}Y^{(6)}...Y^{(M-2)}Y^{(M-1)}Y^{(M)}$) represents a new data string. X and Y each have a size of 8 bytes. In this example of processing, each generation is assumed to be implemented by calculation with matrix A modulo $2^{64}$.

First, the calculation described above is applied to $X^{(1)}X^{(2)}X^{(3)}$ contained in the data string X shown in equation (37-1), to obtain $Y^{(1)}Y^{(2)}Y^{(3)}$ as shown in equation (37-2).

Next, the calculation described above is applied to $Y^{(2)}Y^{(3)}X^{(4)}$ contained in the data string $Y^{(1)}Y^{(2)}Y^{(3)}X^{(4)}X^{(5)}X^{(6)}...X^{(M-2)}X^{(M-1)}X^{(M)}$ in equation (37-3), to obtain $Y^{(2)}Y^{(3)}Y^{(4)}$ as shown in equation (37-4). This generates a data string $Y^{(1)}Y^{(2)}Y^{(3)}Y^{(4)}X^{(5)}X^{(6)}...X^{(M-2)}X^{(M-1)}X^{(M)}$ in equation (37-5).

In this way, the calculation described above is applied successively to three data items in the data string X ($X^{(1)}X^{(2)}X^{(3)}X^{(4)}X^{(5)}X^{(6)}...X^{(M-2)}X^{(M-1)}X^{(M)}$) in order from the front, to generate a data string $Y^{(1)}Y^{(2)}Y^{(3)}Y^{(4)}Y^{(5)}Y^{(6)}...Y^{(M-2)}Y^{(M-1)}X^{(M)}$ as shown in the left side of equation (37-6).

Thereafter, the calculation described above is applied to $Y^{(M-2)}Y^{(M-1)}X^{(M)}$, to obtain $Y^{(M-2)}Y^{(M-1)}Y^{(M)}$ as shown in equation (37-7), and generate a data string Y ($Y^{(1)}Y^{(2)}Y^{(3)}Y^{(4)}Y^{(5)}Y^{(6)}...Y^{(M-2)}Y^{(M-1)}Y^{(M)}$) as shown in equation (37-8).

S13: The data string Y generated at S12 is processed by substitution of the upper 32 bits and the lower 32 bits between adjacent pieces of data, to generate a new data string Z.

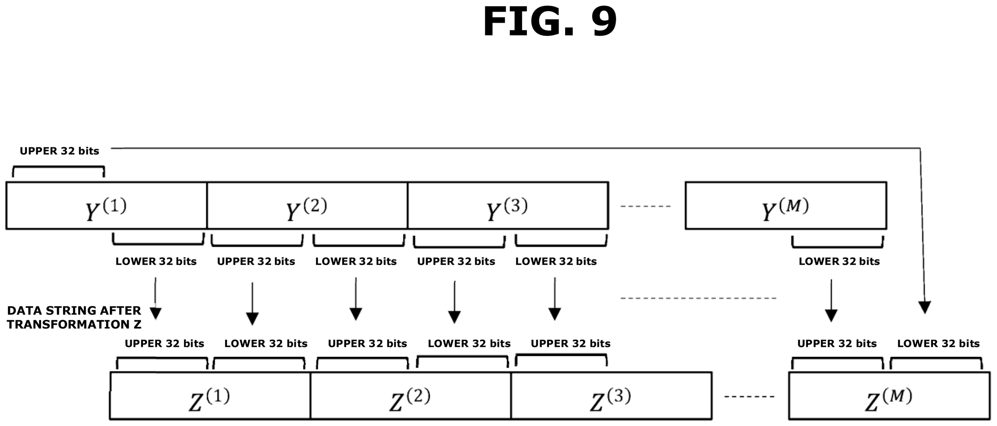

For example, as shown in FIG. 9, the lower 32 bits of data $Y^{(1)}$ and the upper 32 bits of data $Y^{(2)}$ are combined for substitution, the lower 32 bits of data $Y^{(2)}$ and the upper 32 bits of data $Y^{(3)}$ are combined for substitution, the lower 32 bits of data $Y^{(3)}$ and the upper 32 bits of data $Y^{(4)}$ are combined for substitution, and subsequent data Y are similarly manipulated for substitution. Finally, the lower 32 bits of data $Y^{(M)}$ and the upper 32 bits of data $Y^{(1)}$ are combined for substitution, thereby generating a data string Z.

S14: The data string Z created at S13 is multiplied by the matrix A modulo $2^{64}$ in order from the end, to generate a new data string S.

$$Z^{(1)} \; Z^{(2)} \; Z^{(3)} \; Z^{(4)} \; Z^{(5)} \; Z^{(6)} \; -------- Z^{(M-4)} \; Z^{(M-3)} \; Z^{(M-2)} \; Z^{(M-1)} \; Z^{(M)} \qquad \cdots (38\text{-}1)$$

$$\left(S^{(M-2)} \, S^{(M-1)} \, S^{(M)}\right) \equiv \left(Z^{(M-2)} \, Z^{(M-1)} \, Z^{(M)}\right) A \bmod 2^{64} \qquad \cdots (38\text{-}2)$$

$$Z^{(1)} \; Z^{(2)} \; Z^{(3)} \; Z^{(4)} \; Z^{(5)} \; Z^{(6)} \; -------- Z^{(M-4)} \; Z^{(M-3)} \; S^{(M-2)} \; S^{(M-1)} \; S^{(M)} \qquad \cdots (38\text{-}3)$$

$$\left(S^{(M-3)} \, S^{(M-2)} \, S^{(M-1)}\right) \equiv \left(Z^{(M-3)} \, S^{(M-2)} \, S^{(M-1)}\right) A \bmod 2^{64} \qquad \cdots (38\text{-}4)$$

$$Z^{(1)} \; Z^{(2)} \; Z^{(3)} \; Z^{(4)} \; Z^{(5)} \; Z^{(6)} \; -------- Z^{(M-4)} \; S^{(M-3)} \; S^{(M-2)} \; S^{(M-1)} \; S^{(M)} \qquad \cdots (38\text{-}5)$$

$$Z^{(1)} \; S^{(2)} \; S^{(3)} \; S^{(4)} \; S^{(5)} \; S^{(6)} \; -------- S^{(M-4)} \; S^{(M-3)} \; S^{(M-2)} \; S^{(M-1)} \; S^{(M)} \qquad \cdots (38\text{-}6)$$

$$\left(S^{(1)} \, S^{(2)} \, S^{(3)}\right) \equiv \left(Z^{(1)} \, S^{(2)} \, S^{(3)}\right) A \bmod 2^{64} \qquad \cdots (38\text{-}7)$$

$$S^{(1)} \; S^{(2)} \; S^{(3)} \; S^{(4)} \; S^{(5)} \; S^{(6)} \; -------- S^{(M-4)} \; S^{(M-3)} \; S^{(M-2)} \; S^{(M-1)} \; S^{(M)} \qquad \cdots (38\text{-}8)$$

The following describes an example of processing with reference to equation (38). Also in this example of processing, each generation is assumed to be implemented by calculation with matrix A modulo $2^{64}$.

Equation (38-1) shows the data string after the substitution Z ($Z^{(1)}Z^{(2)}Z^{(3)}Z^{(4)}Z^{(5)}Z^{(6)}...Z^{(M-4)}Z^{(M-3)}Z^{(M-2)}Z^{(M-1)}Z^{(M)}$). First, as shown in equations (38-2) and (38-3), the calculation described above is applied to $Z^{(M-2)}Z^{(M-1)}Z^{(M)}$ contained in the data string Z, to generate $S^{(M-2)}S^{(M-1)}S^{(M)}$. Thereafter, as shown in equations (38-4) and (38-5), the calculation described above is applied to $Z^{(M-3)}S^{(M-2)}S^{(M-1)}$, to generate $S^{(M-3)}S^{(M-2)}S^{(M-1)}$.

In this way, the calculation described above is applied successively to three data items in order from the end of the data string Z, to generate $Z^{(1)}S^{(2)}S^{(3)}S^{(4)}S^{(5)}S^{(6)}...S^{(M-4)}S^{(M-3)}S^{(M-2)}S^{(M-1)}S^{(M)}$ as shown in equation (38-6).

Then, the calculation described above is applied to $Z^{(1)}S^{(2)}S^{(3)}$, to generate $S^{(1)}S^{(2)}S^{(3)}$ as shown in equation (38-7), and thereby generate a new data string S ($S^{(1)}S^{(2)}S^{(3)}S^{(4)}S^{(5)}S^{(6)}... S^{(M-4)}S^{(M-3)}S^{(M-2)}S^{(M-1)}S^{(M)}$) as shown in equation (38-8).

(2) Reconstruction function

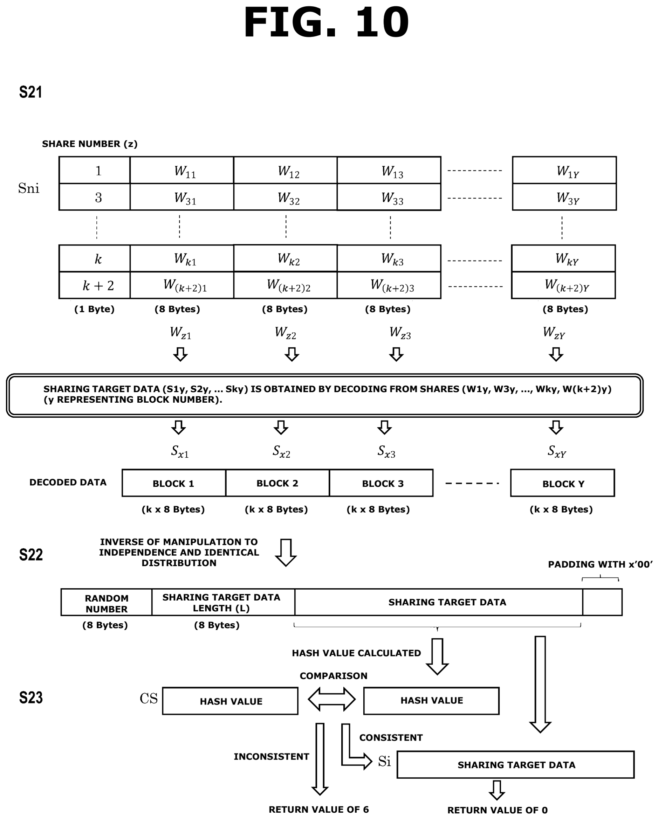

The following describes the reconstruction function with reference to FIG. 10. Here, the original sharing target data is reconstructed and restored based on the shares of data (shares and auxiliary shares) by performing a process generally opposite in direction to the share data generation function.

In FIG. 7, arrows C and D show a situation in which the original sharing target data is restored using the auxiliary share (k+2) because the share (2) has been broken or lost. The following information is set as arguments to the reconstruction function.

<Arguments (input)>

- N (unsigned char *N)

This is a starting address of a one-dimensional array that stores the reconstructing shares count and the auxiliary shares count, where the same value is set as Si of the share data generation function.

- P (unsigned char *P)

This is a starting address of a one-dimensional array that stores the data length (8 bytes) of the sharing target data, where the same value is set as Si of the share data generation function.

- CS (unsigned char *CS)

This is a starting address of a one-dimensional array that stores the hash value (32 bytes) of the sharing target data, where the same value is set as the hash value returned by CS of the share data generation function.

- Sni (unsigned char *Sni)

This is a starting address of a two-dimensional array that stores the share used for reconstruction, and this two-dimensional array is set in the same way as Sni of the share data generation function. For example, when the reconstructing shares count is three, the auxiliary shares count is two, and the shares having share numbers 1 and 3 cannot be collected due to missing or defects, reconstruction is performed with two auxiliary shares. In this case, the two-dimensional array is as follows (wherein the share numbers do not need to be sorted in order):

Sni[0]: Share number 2 + share data (share) of share number 2 + hash value,
Sni[1]: Share number 4 + share data (auxiliary share) of share number 4 + hash value, and
Sni[2]: Share number 5 + share data (auxiliary share) of share number 5 + hash value.

It is to be noted that the number of rows of the two-dimensional array is equal to the reconstructing shares count, and the number of columns of the two-dimensional array is equal to the total number of blocks x 8 + 1 (bytes). This total number of blocks is the same as Sni of the share data generation function.

<Arguments (output)>

- Si (unsigned char *Si)

This is a starting address of a one-dimensional array that stores the decoded sharing target data, wherein the size of the array is equal to the data length set in the argument (input) P. The following describes operations S21 to S23 of the reconstruction function.

S21: When a process is started, the shares of data, i.e., shares $W_1$, $W_2$, ..., $W_k$ and auxiliary shares ($W_{k+1}$ and $W_{k+2}$ in case of two auxiliary shares, and $W_{k+1}$ in case of one auxiliary share) are collected from storages 3-1 to 3-n. Thereafter, it is determined whether or not the collected shares $W_1$, $W_2$, ..., $W_k$ satisfy the reconstructing shares count. In this embodiment, the determination is carried out in two steps.

There may be situations where the shares fail to be collected within a predetermined time due to failures in the storages 3 or network errors, resulting in a timeout and thereby a loss of a share. From this viewpoint, as a first step, it is confirmed based on the share numbers of the collected shares whether or not the count of the collected shares satisfy the reconstructing shares count. For example, when a timeout occurs during collection of shares having share numbers 1 and 3, the shares having share numbers 1 and 3 are assumed to be lost. In this situation, the shares having share numbers 1 and 3 are unavailable, so that it is determined that the reconstructing shares count is not satisfied. On the other hand, when the count of the collected shares satisfies the reconstructing shares count, the process proceeds to a second step of error checking.

At the second step, the hash value of each collected share $W_1$, $W_2$, ..., $W_k$ is calculated and compared with the hash value set in Sni of the reconstruction function.

When the comparison concludes that the two hash values are identical to each other, the share is recognized as normal. When all the shares $W_1$, $W_2$, ..., $W_k$ are recognized as normal, it is determined that the count of normal shares is equal to and thereby satisfies the reconstructing shares count. In this situation, the original sharing target data is reconstructed by decoding only the shares $W_1$, $W_2$, ..., $W_k$.

On the other hand, when the two hash values are not identical to each other, it is determined that data corruption or the like has occurred, and the share is abnormal. For example, when the two hash values for the share having share number 3 are not identical to each other, this share is determined as being abnormal. In this situation, the share with share number 3 is treated as not existing due to a defect, and it is determined that the reconstructing shares count is not satisfied. It is preferable to perform similar error checking of the auxiliary shares to confirm whether they are normal or abnormal.

When it is determined that the reconstructing shares count is not satisfied, the auxiliary shares $W_{k+1}$ and $W_{k+2}$ are used (when the auxiliary shares count = 2). For example, in FIG. 10, S21 represents a situation where, as in FIG. 7, the share having share number 2 is deemed non-existent, and instead the (k+2)th auxiliary share is used to decode together with the existing shares. Preferably, the used auxiliary share satisfies a requirement of being recognized as normal by error checking.

As described above, in this embodiment, the shares of data are made redundant by the AMSSS, so that it is possible to restore the sharing target data even when one or two of the shares $W_1$, $W_2$, ..., $W_k$ are missing or defective. For restoring, based on the shares of data set in the two-dimensional array Sni, a predetermined operation is applied to each block on $GF(2^{64})$, to obtain the sharing target data by decoding. The following describes details of the operation (where block number y is omitted).

<Decoding only with $W_1$, $W_2$, ..., $W_k$>

When it is determined that the reconstructing shares count is satisfied, decoding is performed only with the shares $W_1$, $W_2$, ..., $W_k$ using equations (39) and (40).

$$\hat{V} = \sum_{x=1}^{k} W_x \qquad \cdots (39)$$

$$S_z = \begin{cases} [W_z - (\alpha - 1)^{-1}\hat{V}](\alpha - 1)^{-1}, & \text{when } k \text{ is even} \\ [W_z - \alpha^{-1}\hat{V}](\alpha - 1)^{-1}, & \text{when } k \text{ is odd} \end{cases} \quad \text{for } z = 1, 2, 3, \cdots, k \qquad \cdots (40)$$

$W_z$: The value of the share having shared number z of the block to be decoded (8 bytes), and
$S_z$: The zth value of the decoded block (8 bytes).

Here, $(\alpha-1)^{-1}$ and $\alpha^{-1}$ are calculated in advance and defined as unsigned long long type constants in the program to speed up the decoding process.

<When $W_a$ ($1 \leq a \leq k$) does not exist>

When the share $W_a$ ($1 \leq a \leq k$) does not exist (when $W_a$ is missing or defective), first, (k-1) of the shares $W_i$ ($1 \leq i \leq k$, $i \neq a$) and one of the auxiliary shares are used to determine the share $W_a$. This is implemented using equations (41) to (43). Here, the upper part of equation (41) is equivalent to equation (23), and the lower part of equation (41) is equivalent to equation (24).

$$W_a = \begin{cases} \dfrac{\alpha-1}{\alpha^{2(a-1)}-\beta_k}W_{k+1} - \displaystyle\sum_{i=1,i\neq a}^{k}\dfrac{\alpha^{2(i-1)}-\beta_k}{\alpha^{2(a-1)}-\beta_k}W_i, & \text{when } W_{k+1} \text{ is used} \\[4mm] \dfrac{\alpha-1}{\alpha^{3(a-1)}-\gamma_k}W_{k+2} - \displaystyle\sum_{i=1\,i\neq a}^{k}\dfrac{\alpha^{3(i-1)}-\gamma_k}{\alpha^{3(a-1)}-\gamma_k}W_i, & \text{when } W_{k+2} \text{ is used} \end{cases} \qquad \cdots(41)$$

$$\beta_k = \begin{cases} (\alpha-1)^{-3}(\alpha^{2k}-1) & \text{when k is even} \\ \alpha^{-1}(\alpha-1)^{-2}(\alpha^{2k}-1) & \text{when k is odd} \end{cases} \qquad \cdots(42)$$

$$\gamma_k = \begin{cases} (\alpha-1)^{-1}(\alpha^3-1)^{-1}(\alpha^{3k}-1) & \text{when k is even} \\ \alpha^{-1}(\alpha^3-1)^{-1}(\alpha^{3k}-1) & \text{when k is odd} \end{cases} \qquad \cdots(43)$$

In order to reduce the time of this calculation, it is preferable to evaluate coefficients relating to $W_i$, $W_{k+1}$, $W_{k+2}$ in equation (41) and set them in an array in advance. For example, the coefficients relating to $W_{k+1}$ and $W_{k+2}$ are determined by k and a. Accordingly, the coefficients are initially set in a two-dimensional array with k and a as elements of the array. Furthermore, the coefficient relating to $W_i$ is determined by k, a, and i. Accordingly, the coefficient is initially set in a three-dimensional array having these as elements. Next, the sharing target data is obtained by decoding using equation (40) based on the shares $W_i$ ($1 \leq i \leq k$, $i \neq a$) and the share $W_a$ that is obtained using equations (41) to (43).

<When $W_a$ and $W_b$ ($1 \leq a \leq b \leq k$) do not exist>

When the shares $W_a$ and $W_b$ ($1 \leq a \leq b \leq k$) do not exist (when the shares $W_a$ and $W_b$ are missing or defective), (k-2) shares $W_i$ ($1 \leq i \leq k$, $i \neq a$, $i \neq b$) and two auxiliary shares are first used to determine the shares $W_a$ and $W_b$. This is implemented using equations (44) to (46). Here, equation (44) is equivalent to equation (27-1), and equation (45) is equivalent to equation (27-2).

$$W_a = \Delta^{-1}\big(\alpha^{3(b-1)}-\gamma_k\big)(\alpha-1)W_{k+1} - \Delta^{-1}\big(\alpha^{2(b-1)}-\beta_k\big)(\alpha-1)W_{k+2}$$
$$+ \sum_{i=1,i\neq a\,i\neq b}^{k} \Delta^{-1}\big[\big(\alpha^{2(b-1)}-\beta_k\big)\big(\alpha^{3(i-1)}-\gamma_k\big) - \big(\alpha^{3(b-1)}-\gamma_k\big)\big(\alpha^{2(i-1)}-\beta_k\big)\big]W_i \qquad \cdots(44)$$

$$W_b = \Delta^{-1}\big(\alpha^{3(a-1)}-\gamma_k\big)(\alpha-1)W_{k+1} - \Delta^{-1}\big(\alpha^{2(a-1)}-\beta_k\big)(\alpha-1)W_{k+2}$$
$$+ \sum_{i=1,i\neq a,i\neq b}^{k} \Delta^{-1}\big[\big(\alpha^{2(a-1)}-\beta_k\big)\big(\alpha^{3(i-1)}-\gamma_k\big) - \big(\alpha^{3(a-1)}-\gamma_k\big)\big(\alpha^{2(i-1)}-\beta_k\big)\big]W_i \qquad \cdots(45)$$

$$\Delta = \big(\alpha^{3(a-1)}-\gamma_k\big)\big(\alpha^{2(b-1)}-\beta_k\big) - \big(\alpha^{2(a-1)}-\beta_k\big)\big(\alpha^{3(b-1)}-\gamma_k\big) \qquad \cdots(46)$$

Also, in order to reduce the time of this calculation, it is preferable to evaluate coefficients relating to $W_i$, $W_{k+1}$, $W_{k+2}$ in equations (44) and (45) and set them in an array in advance. For example, the coefficients relating to $W_{k+1}$ and $W_{k+2}$ are determined by k, a, and b. Accordingly, the coefficients are initially set in a three-dimensional array having these as elements. Furthermore, the coefficient relating to $W_i$ is determined by k, a, b, and i. Accordingly, the coefficient is initially set in a four-dimensional array having these as elements. Next, the sharing target data is obtained by decoding using equation (40) based on the shares $W_i$ ($1 \leq i \leq k$, $i \neq a$, $i \neq b$) and the shares $W_a$ and $W_b$ that are obtained using equations (44) to (46).

S22: The data string, which is obtained by decoding at S21, is made to undergo an operation opposite in direction to the manipulation for independence and identical distribution at S04. This operation is implemented as follows.

(a) The inverse matrix B of matrix A is used, and calculation with the matrix B is performed modulo $2^{64}$ in order from the front of the data string (inverse operation to S14).
(b) The data string after the calculation of the inverse matrix B is processed by inverse substitution of the upper 32 bits and the lower 32 bits between adjacent pieces of data (inverse operation to S13).

(c) The data string after the inverse substitution is multiplied by the inverse matrix B modulo $2^{64}$ in order from the end (inverse operation to S12).

S23: The sharing target data is extracted from the data string generated after the operation of S22, and its hash value (SHA-256 by OpenSSL) is calculated. The calculated hash value is compared with the hash value set in CS of the reconstruction function to check whether or not the reconstructed sharing target data is correct.

Specifically, when the two hash values are identical to each other, the decoded sharing target data is set in a one-dimensional array Si, and a return value of 0 is returned. On the other hand, when the two hash values are different from each other, the reconstruction is not successful, and a value other than 0 is returned (a return value of 6 is shown in FIG. 6, but any other value may be used). It is preferable that it is configured to try to restore again in the above situation.

As described above, this embodiment employs the AMSSS and thereby takes advantage of the high speed of the multiplex secret sharing scheme (MSSS) while creating one or two auxiliary shares, wherein the auxiliary shares are used to reconstruct the sharing target data. This makes it possible to ensure both confidentiality and availability of a large-capacity backup system in a data center or the like.

## Second Embodiment

In the first embodiment, it is determined in two steps whether or not the set of shares satisfies the reconstructing shares count. However, in this embodiment, the determination is made only by the first step without the second step.

Accordingly, at S06 of this embodiment, it is unnecessary to obtain a hash value of each share of data. It is also unnecessary to set a hash value of each share of data in the share data generation function and the reconstruction function.

Specifically, (1) When all of the shares $W_1$, $W_2$, ..., $W_k$ can be collected from the storages 3-1 to 3-n without the occurrence of a timeout, it is determined that the reconstructing shares count is satisfied. In this situation, as in the first embodiment, the decoding can be implemented only with the shares of data $W_1$, $W_2$, ..., $W_k$ using equations (39) and (40).

However, when any of the shares $W_1$, $W_2$, ..., $W_k$ used for the decoding is defective due to data corruption or the like, a return value other than 0 is returned at S23 for confirmation of success or failure, and another attempt of restoration is made. When the count of the defective shares = 1, one of the shares is successively replaced with the auxiliary share $W_{k+1}$ in the order of the share numbering, and the decoding is performed using equations (39) and (40). On the other hand, when the count of the defective shares = 2, two of the shares are successively replaced with auxiliary shares $W_{k+1}$ and $W_{k+2}$ in the order of the share numbering, and the decoding is performed using equations (39) and (40).

(2) On the other hand, when a timeout occurs in collection of any of the shares $W_1$, $W_2$, ..., $W_k$, it is determined that the reconstructing shares count is not satisfied. In this situation, the sharing target data is restored by the same operation as the operation according to the first embodiment for the situation where $W_a$ ($1 \leq a \leq k$) does not exist.

The present invention is not limited to the embodiments described above, but the embodiments may be modified to implement the invention within the scope of the claims. For example, the invention may be embodied as a secret sharing program that causes a computer to execute the processing steps (S01 to S06, S11 to S14, and S21 to S23) of the secret sharing method according to the present embodiments.

With this program, the secret sharing system 1 can be constructed on a computer. The program may be stored in a recording medium and distributed, or may be distributed by being downloaded via the Internet.

## Description of Reference Signs

1...Secret information system
2...Storage server device
3-1 to 3-n...Storage devices
4...Network
14...Share data generation section
15... Data restoration section
16...Random number generation section
21...Communication section
22...Storage section

**EP 4 734 096 A1**

**Claims**

1. A secret sharing method using a secret sharing system, wherein the secret sharing system includes:

   a share data generation section configured to generate a set of shares by encoding and distributing sharing target data;
   storage sections each of which is configured to store a corresponding one of the shares; and
   a data restoration section configured to collect the shares stored in the storage sections, and decode the collected shares and reconstruct the sharing target data in accordance with a predetermined reconstructing shares count;
   the secret sharing method comprising:

   a share data generation step to cause the share data generation section to generate, from the sharing target data, a set of first shares corresponding to the reconstructing shares count, and an auxiliary share redundant from the set of first shares, and distribute and store the generated first shares and the generated auxiliary share in the storage sections; and
   a reconstruction step to cause the data restoration section to collect the first shares and the auxiliary share from the storage sections, and when the collected set of first shares satisfies the reconstructing shares count, reconstruct the sharing target data using the collected set of first shares, and when the collected set of first shares does not satisfy the reconstructing shares count, determine an unavailable one of the first shares based on available ones of the first shares and the auxiliary share, and reconstruct the sharing target data.

2. The secret sharing method according to claim 1,
   wherein:

   the share data generation step includes a step of calculating a first value of an error detection code for each of the generated shares and setting the first value of the error detection code in the data restoration section; and
   the reconstruction step includes a step of determining whether or not each of the shares is available by calculating a second value of the error detection code for each of the collected shares and comparing the second value of the error detection code with the first value of the error detection code.

3. The secret sharing method according to claim 1,
   wherein the reconstruction step includes:

   a first step of reconstructing the sharing target data based on the collected first shares, in response to a condition that the collected first shares satisfies the reconstructing shares count in number; and
   a second step of reconstructing the sharing target data based on the auxiliary share in place of one of the collected first shares successively in an order of assigned numbers of the first shares, in response to a failure of the first step.

4. A secret sharing method using a secret sharing system, wherein the secret sharing system includes:

   a share data generation section configured to generate a set of shares by encoding and distributing sharing target data;
   storage sections each of which is configured to store a corresponding one of the shares; and
   a data restoration section configured to collect the shares stored in the storage sections, and decode the collected shares and reconstruct the sharing target data in accordance with a predetermined reconstructing shares count;
   the secret sharing method comprising:

   a share data generation step to cause the share data generation section to generate, from the sharing target data, a set of first shares corresponding to the reconstructing shares count, and one or two auxiliary shares redundant from the set of first shares, and distribute and store the generated first shares and the generated auxiliary shares in the storage sections; and
   a reconstruction step to cause the data restoration section to collect the first shares and the auxiliary shares from the storage sections, and when the collected set of first shares satisfies the reconstructing shares count, reconstruct the sharing target data using the collected set of first shares, and when the collected set of first shares does not satisfy the reconstructing shares count, reconstruct the sharing target data using the auxiliary shares;

21

wherein the share data generation step includes:

a first step of reading each piece of information from a share data generation function that stores information on the reconstructing shares count (k), a count of the auxiliary shares (r), a data length (L) of the sharing target data, and the sharing target data;

a second step of generating a random number and creating a data string (S), wherein the data string (S) has a number of bytes that is a multiple of a product (k x 8) of the reconstructing shares count and 8, and wherein the data string (S) is composed of the generated random number, the data length (L), and the sharing target data; and

a third step of dividing the data string (S) into the product (k x 8) of blocks, applying an operation to each of the divided blocks, and obtaining a share (W);

wherein the third step employs equations (28) and (29) when the count of auxiliary shares (r) is equal to 1,

$$\left(W_{1y}, W_{2y}, W_{3y}, \cdots, W_{ky}, W_{(k+1)y}\right) = \left(S_{1y}, S_{2y}, S_{3y}, \cdots, S_{ky}\right)G \qquad \cdots (28)$$

where $S_{xy}$ represents an xth value (x = 1, 2, 3...k) of a block with a block number y, having a size of 8 bytes,

$W_{zy}$ represents a value of one of the shares of a block with the block number y and a share number z (z = 1, 2, 3...k), having a size of 8 bytes, and

$W_{(k+1)y}$ represents the auxiliary share, and

$$G = \begin{bmatrix} \alpha & 1 & 1 & \cdots & 1 & 1 & 1 \\ 1 & \alpha & 1 & \cdots & 1 & 1 & \alpha^2 \\ 1 & 1 & \alpha & \cdots & 1 & 1 & \alpha^4 \\ \vdots & \vdots & \vdots & \ddots & \vdots & \vdots & \vdots \\ 1 & 1 & 1 & \cdots & \alpha & 1 & \alpha^{2(k-2)} \\ 1 & 1 & 1 & \cdots & 1 & \alpha & \alpha^{2(k-1)} \end{bmatrix} \qquad \cdots (29)$$

; and

wherein the third step employs equations (30) and (31) when the count of auxiliary shares (r) is equal to 2,

$$\left(W_{1y}, W_{2y}, W_{3y}, \cdots, W_{ky}, W_{(k+1)y}, W_{(k+2)y}\right) = \left(S_{1y}, S_{2y}, S_{3y}, \cdots, S_{ky}\right)G \qquad \cdots (30)$$

where $S_{xy}$ represents an xth value (x = 1, 2, 3...k) of a block with a block number y, having a size of 8 bytes,

$W_{zy}$ represents a value of one of the shares of a block with the block number y and a share number z (z = 1, 2, 3...k), having a size of 8 bytes, and

$W_{(k+1)y}$ and $W_{(k+2)y}$ represent the auxiliary shares, and

$$G = \begin{bmatrix} \alpha & 1 & 1 & \cdots & 1 & 1 & 1 & 1 \\ 1 & \alpha & 1 & \cdots & 1 & 1 & \alpha^2 & \alpha^3 \\ 1 & 1 & \alpha & \cdots & 1 & 1 & \alpha^4 & \alpha^6 \\ \vdots & \vdots & \vdots & \ddots & \vdots & \vdots & \vdots & \vdots \\ 1 & 1 & 1 & \cdots & \alpha & 1 & \alpha^{2(k-2)} & \alpha^{3(k-2)} \\ 1 & 1 & 1 & \cdots & 1 & \alpha & \alpha^{2(k-1)} & \alpha^{3(k-1)} \end{bmatrix} \qquad \cdots (31)$$

5. A secret sharing system comprising:

a share data generation section configured to generate a set of shares by encoding and distributing sharing target data;

storage sections each of which is configured to store a corresponding one of the shares; and

a data restoration section configured to collect the shares stored in the storage sections, and decode the collected shares and reconstruct the sharing target data in accordance with a predetermined reconstructing shares count; wherein the share data generation section is configured to generate, from the sharing target data, a set of first shares corresponding to the reconstructing shares count, and an auxiliary share redundant from the set of first shares, and distribute and store the generated first shares and the generated auxiliary share in the storage sections; and

wherein the data restoration section is configured to:

collect the first shares and the auxiliary share from the storage sections;

when the collected set of first shares satisfies the reconstructing shares count, reconstruct the sharing target data using the collected set of first shares; and

when the collected set of first shares does not satisfy the reconstructing shares count, determine an unavailable one of the first shares based on available ones of the first shares and the auxiliary share, and reconstruct the sharing target data.

6. A secret sharing program for causing a computer to execute the secret sharing method according to any one of claims 1 to 4.

# FIG. 1

# FIG. 2

## (k, n) THRESHOLD SCHEME

WITH ARBITRARY k SHARES, ORIGINAL INFORMATION CAN BE RESTORED.

⇒ SECURE EVEN WITH UP TO n-k SHARES FAILED OR DESTRUCTED.

WITH ARBITRARY k-1 SHARES, ORIGINAL INFORMATION CANNOT BE OBTAINED.

⇒ SECURE EVEN WITH UP TO k-1 SHARES STOLEN.

# FIG. 3

# FIG. 4

# FIG. 5

1

21 COMMUNICATION SECTION

2

16 RANDOM NUMBER GENERATION SECTION

S SECRET INFORMATION

14 SHARE DATA GENERATION SECTION

15 DATA RESTORATION SECTION

STORAGE SECTION 22

SHARE DATA

STORAGE SECTION 22

SHARE DATA

... STORAGE SECTION 22

SHARE DATA

3-1

3-1

3-n

# FIG. 6

4

51 COMMUNICATION DEVICE

57

52 INPUT DEVICE

53 MEMORY

54 AUXILIARY STORAGE DEVICE

55 CPU

56 OUTPUT DEVICE

5

FIG. 7

# FIG. 8

**S02**  HASH VALUE (SHA-256) IS GENERATED  ⇨ CS  | HASH VALUE |

(32 Bytes)

**S01**

Si | RECONSTRUCTING SHARES COUNT (k) | AUXILIARY SHARES COUNT (r) | SHARING TARGET DATA LENGTH (L) | SHARING TARGET DATA |

(1 Byte)　　　　　(1 Byte)　　　　　(8 Bytes)　　　　　(L Bytes)

**S03**  ⇩　　　⇩　　　PADDING WITH x'00'

| RANDOM NUMBER | SHARING TARGET DATA LENGTH (L) | SHARING TARGET DATA | |

(8 Bytes)　　　　　(8 Bytes)　　　　　(L Bytes)

**S04**  MANIPULATION TO INDEPENDENCE AND IDENTICAL DISTRIBUTION ⇩

**S05**  | BLOCK 1 | BLOCK 2 | BLOCK 3 | - - - - - - - - - | BLOCK Y |

(k x 8 Bytes)　　(k x 8 Bytes)　　(k x 8 Bytes)　　　　　(k x 8 Bytes)

$S_{x1}$　　　$S_{x2}$　　　$S_{x3}$　　　　　$S_{xY}$

⇩　　　⇩　　　⇩　　　　　⇩

$$(W_{1y}, W_{2y}, W_{3y}, \cdots, W_{ky}, W_{(k+1)y}, W_{(k+2)y}) = (S_{1y}, S_{2y}, S_{3y}, \cdots, S_{ky})G$$ CALCULATED (y REPRESENTING BLOCK NUMBER)

⇩　　　⇩　　　⇩　　　　　⇩

SHARE NUMBER (z)　$W_{z1}$　　$W_{z2}$　　$W_{z3}$　- - - - - - - - -　$W_{zY}$

**S06**

Sni

| z | | | | | |
|---|---|---|---|---|---|
| 1 | $W_{11}$ | $W_{12}$ | $W_{13}$ | --------- | $W_{1Y}$ |
| 2 | $W_{21}$ | $W_{22}$ | $W_{23}$ | --------- | $W_{2Y}$ |
| 3 | $W_{31}$ | $W_{32}$ | $W_{33}$ | --------- | $W_{3Y}$ |
| ⋮ | ⋮ | ⋮ | ⋮ | | ⋮ |
| k | $W_{k1}$ | $W_{k2}$ | $W_{k3}$ | --------- | $W_{kY}$ |
| k + 1 | $W_{(k+1)1}$ | $W_{(k+1)2}$ | $W_{(k+1)3}$ | --------- | $W_{(k+1)Y}$ |
| k + 2 | $W_{(k+2)1}$ | $W_{(k+2)2}$ | $W_{(k+2)3}$ | --------- | $W_{(k+2)Y}$ |

(1 Byte)　　(8 Bytes)　　(8 Bytes)　　(8 Bytes)　　　　(8 Bytes)

SHARE WITH SHARE NUMBER OF 2

# FIG. 9

# FIG. 10

**S21**

SHARE NUMBER (z)

Sni

| | | | | | |
|---|---|---|---|---|---|
| 1 | $W_{11}$ | $W_{12}$ | $W_{13}$ | ---------- | $W_{1Y}$ |
| 3 | $W_{31}$ | $W_{32}$ | $W_{33}$ | ---------- | $W_{3Y}$ |
| $k$ | $W_{k1}$ | $W_{k2}$ | $W_{k3}$ | ---------- | $W_{kY}$ |
| $k+2$ | $W_{(k+2)1}$ | $W_{(k+2)2}$ | $W_{(k+2)3}$ | ---------- | $W_{(k+2)Y}$ |

(1 Byte)　(8 Bytes)　(8 Bytes)　(8 Bytes)　(8 Bytes)

$W_{z1}$　$W_{z2}$　$W_{z3}$　$W_{zY}$

SHARING TARGET DATA (S1y, S2y, … Sky) IS OBTAINED BY DECODING FROM SHARES (W1y, W3y, …, Wky, W(k+2)y) (y REPRESENTING BLOCK NUMBER).

$S_{x1}$　$S_{x2}$　$S_{x3}$　$S_{xY}$

DECODED DATA

| BLOCK 1 | BLOCK 2 | BLOCK 3 | – – – – – | BLOCK Y |
|---|---|---|---|---|
| (k x 8 Bytes) | (k x 8 Bytes) | (k x 8 Bytes) | | (k x 8 Bytes) |

**S22**　INVERSE OF MANIPULATION TO INDEPENDENCE AND IDENTICAL DISTRIBUTION

PADDING WITH x'00'

| RANDOM NUMBER | SHARING TARGET DATA LENGTH (L) | SHARING TARGET DATA | |
|---|---|---|---|
| (8 Bytes) | (8 Bytes) | | |

HASH VALUE CALCULATED

COMPARISON

**S23**　CS | HASH VALUE | ⬌ | HASH VALUE |

CONSISTENT

INCONSISTENT

Si | SHARING TARGET DATA |

RETURN VALUE OF 6

RETURN VALUE OF 0

## INTERNATIONAL SEARCH REPORT

| International application No. |
|---|
| **PCT/JP2024/019909** |

### A. CLASSIFICATION OF SUBJECT MATTER

*G09C 1/00*(2006.01)i; *G06F 21/62*(2013.01)i
FI: G09C1/00 650Z; G06F21/62 309

According to International Patent Classification (IPC) or to both national classification and IPC

### B. FIELDS SEARCHED

Minimum documentation searched (classification system followed by classification symbols)

G09C1/00; H04L9/08; G06F21/60-G06F21/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2004-328293 A (C4 TECHNOLOGY INC.) 18 November 2004 (2004-11-18) paragraphs [0034]-[0035] | 1-6 |
| A | JP 2011-35618 A (NTT COMMUNICATIONS CORPORATION) 17 February 2011 (2011-02-17) paragraphs [0019], [0068]-[0095] | 1-6 |
| A | JP 2018-54841 A (RICOH COMPANY, LTD.) 05 April 2018 (2018-04-05) paragraphs [0148]-[0169] | 1-6 |
| A | JP 2016-173534 A (NIPPON TELEGRAPH AND TELEPHONE CORPORATION) 29 September 2016 (2016-09-29) | 1-6 |
| A | KR 10-2008-0087573 A (SAMSUNG ELECTRONICS CO., LTD.) 01 October 2008 (2008-10-01) | 1-6 |

☑ Further documents are listed in the continuation of Box C.    ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **20 June 2024** | **02 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
| --- |
| **PCT/JP2024/019909** |

| C. | DOCUMENTS CONSIDERED TO BE RELEVANT | |
| --- | --- | --- |
| Category* | Citation of document, with indication, where appropriate, of the relevant passages | Relevant to claim No. |
| A | 山本 博資, 多重秘密分散法, 第44回情報理論とその応用シンポジウム予稿集, 01 December 2021, pp. 216-220 (YAMAMOTO, Hirosuke, Multiplex Secret Sharing Schemes, The proceedings of the 44th Symposium on Information Theory and Its Applications) | 1-6 |

Form PCT/ISA/210 (second sheet) (July 2022)

## INTERNATIONAL SEARCH REPORT
### Information on patent family members

International application No.

**PCT/JP2024/019909**

| Patent document cited in search report | | | Publication date (day/month/year) | Patent family member(s) | | | Publication date (day/month/year) |
|---|---|---|---|---|---|---|---|
| JP | 2004-328293 | A | 18 November 2004 | (Family: none) | | | |
| JP | 2011-35618 | A | 17 February 2011 | (Family: none) | | | |
| JP | 2018-54841 | A | 05 April 2018 | US paras. 0183-0211 | 2018/0088814 | A1 | |
| JP | 2016-173534 | A | 29 September 2016 | JP | 5968484 | B1 | |
| | | | | US | 2018/0053442 | A1 | |
| | | | | WO | 2016/147718 | A1 | |
| | | | | EP | 3258458 | A1 | |
| | | | | CN | 107430829 | A | |
| KR | 10-2008-0087573 | A | 01 October 2008 | (Family: none) | | | |

Form PCT/ISA/210 (patent family annex) (July 2022)

## REFERENCES CITED IN THE DESCRIPTION

**Non-patent literature cited in the description**

- **SHAMIR, ADI**. How to Share a Secret. *Commun. ACM*, November 1979, vol. 22 (11), 612-613, <http://doi.acm.org/10.1145/359168.359176>
- Information technology - Security techniques - Secret sharing - Part 2: Fundamental mechanisms. *ISO/IEC*, October 2017, 19592-2
- **MASAO YAMASAWA** ; **TOKUYASU KAKUTA** ; **TAKESHI KONDO** ; **TOSHIAKI SAISHO** ; **MASAFUMI GOTAISHI** ; **NAOSHI SATO** ; **SHIGEO TSUJII** ; **KEIICHI NODA**. MELT-UP Activities To Enhance Security of Cryptocurrency (Bitcoin) and Blockchain, -Focus on Private Key Management. *Proc. SCIS2018*, January 2018
- **MASAO YAMASAWA** ; **MASAFUMI GOTAISHI** ; **HIROSUKE YAMAMOTO** ; **SHIGEO TSUJII** ; **SHIGENOBU MINAMI** ; **KUNIHIKO YOSHIMITSU** ; **KEIICHI NODA**. Private Key Protection in Secure Distributed PDS System. *Proc. SCIS2020*, January 2020
- **MASAO YAMASAWA** ; **MASAFUMI GOTAISHI** ; **HIROSUKE YAMAMOTO** ; **YOSHIKAZU MATSUMOTO** ; **KIMIYASU SHIRAMIZU** ; **TARO TOYOSHIMA** ; **KOUHEI SESE** ; **TAKESHI KONDO** ; **SHIGEO TSUJII**. Study on Requirements of Secret Sharing Scheme for Authentication of Distributed Devices Group. *Proc. SCIS2020*, June 2020, 688-692
- **MASAFUMI GOTAISHI** ; **MASAO YAMASAWA** ; **HIROSUKE YAMAMOTO** ; **RYO FUJITA** ; **YOSHIKAZU MATSUMOTO** ; **KIMIYASU SHIRAMIZU** ; **TARO TOYOSHIMA** ; **KOUHEI SESE** ; **TAKESHI KONDO** ; **SHIGEO TSUJII**. Secret Sharing Scheme for Authentication of Distributed Devices Group. *Proc. SCIS2020*, June 2020, 693-697
- **MASAO YAMASAWA** ; **TAKESHI YONEZU** ; **MASAFUMI GOTAISHI** ; **HIROSUKE YAMAMOTO** ; **SHIGEO TSUJII**. Requirements for Implementation of Secret Sharing Library Applications. *Proceedings of Symposium on Multimedia, Distributed Cooperation, and Mobiles 2021, Proc. DICOMO2021*, June 2021, 163-164
- **MASAO YAMAZAWA** ; **TAKESHI YONEZU** ; **MASAFUMI GOTAISHI** ; **HIROSUKE YAMAMOTO** ; **RYO FUJITA** ; **SHIGEO TSUJII**. Study on Requirements for Implementation of Secret Sharing Library. *Proceedings of Symposium on Multimedia, Distributed Cooperation, and Mobiles (DICOMO2022)*, July 2022, 51-54
- **TATSUAKI OKAMOTO** ; **HIROSUKE YAMAMOTO**. Modern Cryptography. Sangyo Tosho Publishing Co., Ltd., 30 June 1997
- **HIROSUKE YAMAMOTO**. k, L, n) Threshold Secret Sharing System. *Journal of the Institute of Electronics, Information and Communication Engineers*, September 1985, vol. J68-A (9), 945-952
- English translation: Electronics and Communications in Japan, Part I. Scripta Technica, Inc., September 1986, vol. 69, 46-54
- **MIKIHIKO NISHIARA** ; **KATSUNORI TAKIZAWA**. Strong Ramp Threshold Secret Sharing Scheme Using Polynomial Interpolation. *Journal of the Institute of Electronics, Information and Communication Engineers*, December 2009, vol. J92-A (12), 1009-1013
- **HIROSUKE YAMAMOTO**. Multiplex Secret Sharing Scheme. *Proc. The 44th Symposium on Information Theory and its Applications (SITA2021)*, 08 December 2021
- **MASAO YAMAZAWA** ; **TAKESHI YONEZU** ; **MASAFUMI GOTAISHI** ; **HIROSUKE YAMAMOTO** ; **RYO FUJITA** ; **SHIGEO TSUJII**. Empirical Study on Requirements for Implementation of Secret Sharing Library. *Proc. SCIS2023*, 24 January 2023
- **DAI IGARASHI** ; **KOTA TSUYUZAKI** ; **YUTO KAWAHARA**. SHH: Ultra-High-Speed Secret Sharing Library for Object Storage. *Technical Report of Information Processing Society of Japan*, 03 July 2015, vol. 2015-CSEC-70 (26)
- *Windows 11] Verifying Identity of Files by Calculating MD/SHA-1/SHA-256 Hash Values*, 02 November 2023, <URL: 1714031509391_0.html>